Europäisches Patentamt

(19) European Patent Office

Office européen des brevets

(11) Publication number:

**0 045 492**
**B1**

(12) **EUROPEAN PATENT SPECIFICATION**

(45) Date of publication of patent specification: **27.04.88**　　(51) Int. Cl.⁴: **F 16 H 45/02**

(21) Application number: **81106005.2**

(22) Date of filing: **30.07.81**

(54) Fail safe automatic transmission lock up clutch control system.

| | |
|---|---|
| (30) Priority: **31.07.80 JP 105264/80** | (73) Proprietor: **TOYOTA JIDOSHA KABUSHIKI KAISHA**<br>**1, Toyota-cho Toyota-shi**<br>**Aichi-ken 471 (JP)** |
| (43) Date of publication of application:<br>**10.02.82 Bulletin 82/06** | |
| (45) Publication of the grant of the patent:<br>**27.04.88 Bulletin 88/17** | (72) Inventor: **Seitoku, Kubo**<br>**4-5-20, Sakaecho Toyota-shi**<br>**Aichi-ken (JP)**<br>Inventor: **Koujiro, Kuramochi**<br>**35-7, Azaoogida Hosokawacho**<br>**Okazaki-shi Aichi-ken (JP)**<br>Inventor: **Tatsuo, Kyushima**<br>**9-1, Maruyamacho Toyota-shi**<br>**Aichi-ken (JP)** |
| (84) Designated Contracting States:<br>**DE FR GB** | |
| (56) References cited:<br>**EP-A-0 002 447**<br>**EP-B-0 044 487**<br>**DE-A-1 530 661**<br>**DE-A-2 944 811**<br>**US-A-2 824 631**<br>**US-A-3 252 352**<br>**US-A-4 108 022** | (74) Representative: **Grupe, Peter, Dipl.-Ing.**<br>**Patentanwaltsbüro Tiedtke-Bühling-Kinne-Grupe-Pellmann-Grams-Struif Bavariaring 4**<br>**D-8000 München 2 (DE)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

The present invention relates to the field of automatic transmissions; more particularly, relates to the field of automatic transmissions with torque converters which are equipped with lock up clutches; and, yet more particularly, relates to the field of hydraulic fluid pressure control systems for such lock up clutches.

Various automatic transmissions for automotive vehicles are known in various forms. Such an automatic transmission conventionally includes a gear transmission mechanism which provides a plurality of speed stages and which is set to its various speed stages by selective supply of actuating hydraulic fluid pressures to various hydraulic fluid pressure activated friction engaging mechanisms comprised within the gear transmission mechanism such as multi plate clutches and multi plate brakes, said selective supply of actuating hydraulic fluid pressures being provided from a hydraulic fluid pressure control system, of which many forms are per se well known. Such a hydraulic fluid pressure control system typically requires a supply of line hydraulic fluid pressure for operation, and typically receives this supply of line hydraulic fluid pressure from a hydraulic fluid pressurizing pump by way of a line pressure regulation valve which modifies the output hydraulic fluid pressure produced by the pump by releasing a part of said output pressure back to a hydraulic fluid reservoir through a release port.

Further, such an automatic transmission conventionally includes a fluid torque converter, which provides a fluid coupling between the engine of the vehicle and the gear transmission mechanism, thus eliminating the need for any clutch system for the drive train of the vehicle, and allowing for the vehicle to be stationary while the engine is turning at a low rotational speed at or close to the idling speed without the engine stalling, as well as providing torque multiplication by fluid flow in a per se well known way when the vehicle is being accelerated at relatively low speed and relatively low engine rotational speed. Many such torque converters are of course presently well known. Generally, such a torque converter comprises: a housing of a generally toroidal shape, on the inside of which there are formed a series of vanes which constitute a pump impeller, and fixed to a power input shaft; a pump turbine member mounted within the housing as fixed to a power output shaft; and a stator member mounted within the housing via a one way brake on a fixed member. The housing of such a torque converter is kept filled with hydraulic fluid, which is pumped thereinto and is also drained therefrom as will be more fully explained later, and in a per se well known way the pump impeller, the stator member, and the turbine member cooperate, when the housing of the torque converter is thus filled with hydraulic fluid, to define a toroidal hydraulic fluid flow circulation system, circulation of hydraulic fluid around which in the general circulation fashion of a smoke ring is arranged to transfer torque in a conventional manner between the pump impeller and the turbine member of the torque converter.

This supply of hydraulic fluid for filling the torque converter is typically provided to the inside of the housing thereof via a first channel defined along or beside the central rotational axis thereof—in more detail, via a hole in one of the shafts passing along said central rotational axis or through a space defined between two concentric ones of such shafts; and the draining of hydraulic fluid from the torque converter is also typically performed in a similar manner, through a second such channel. The supply of hydraulic fluid is provided, generally in the art, from a torque converter hydraulic fluid pressure regulation valve which supplies a supply of hydraulic fluid at a regulated torque converter hydraulic fluid pressure, which is generally rather lower than the line hydraulic fluid pressure, to the torque converter.

Further, it has become more and more common nowadays for such a torque converter to be provided with a lock up clutch, which is a mechanical clutch which, when actuated, mechanically couples together the pump impeller and the turbine member of the torque converter with regard to their rotation, so that the above mentioned hydraulic torque transmission between the pump impeller and the turbine member no longer occurs or is relevant. The selective engagement of this lock up clutch is performed by a control device such as a hydraulic fluid pressure control device incorporated in the above mentioned hydraulic fluid pressure control system which controls the engagement of the various gear speed stages of the gear transmission mechanism, according to the operational conditions of the vehicle to which the torque converter incorporating this lock up clutch is fitted. In more detail, generally such a lock up clutch is engaged when the torque converter is required to transmit rotary power at a fairly high rotational speed, at which time the torque conversion function of the torque converter is not substantially required. In such a case, if the lock up clutch is not engaged, then, although the torque converter at this time provides a substantially direct power transmission function between its pump impeller and its turbine member, nevertheless a small amount, such as a few per cent, of slippage between the pump impeller and the turbine member will inevitably occur, and this will waste a substantial amount of energy because of the useless churning of hydraulic fluid within the torque converter, and also will cause undesirable heating up of the hydraulic fluid contained within the torque converter. Thus, such a lock up clutch is engaged by the above mentioned hydraulic fluid pressure control device, generally speaking, when and only when the vehicle incorporating the torque converter is being driven at high road speed with the gear transmission mechanism in a

high gear speed stage, with the internal combustion engine of the vehicle thus operating at fairly high rotational speed, in which circumstances the actual hydraulic torque conversion function of the torque converter is not in fact particularly required. The provision of such a lock up clutch is effective for increasing fuel economy of the vehicle, especially when running on the open road such as on an expressway.

It is well known and conventional for such a lock up clutch to be engaged or disengaged according to the directions of supply and draining of the torque converter hydraulic fluid pressure to and from the interior of the housing of the torque converter. In other words, when the torque converter hydraulic fluid pressure as outlined above is being supplied to one channel which leads to the interior of the torque converter housing, and is being released from another channel, then it is arranged that the lock up clutch is engaged; and when the torque converter hydraulic fluid pressure is being supplied to said other channel, and is being drained from said one channel, then it is arranged that the lock up clutch is disengaged. Thus the supply of torque converter hydraulic fluid pressure to the torque converter from the torque converter pressure regulation valve is used for two purposes: to fill the torque converter with hydraulic fluid; and to selectively engage and disengage the lock up clutch, according to the direction of said supply. And this alternaitve supply of hydraulic fluid pressure to one channel and draining from the other channel, and the switching over of the channels, is typically performed by using a lock up clutch control valve, of which various forms have been suggested, in the prior art.

A typical prior art of this kind is described in US—A—4 108 022. This known construction comprises (a) a lock up clutch control valve 280, which is switched between two positions, and which, when in its first switched position, switches said torque converter hydraulic fluid pressure mentioned above so as to supply it to said one channel which leads to the interior of the torque converter housing, and drains said other channel, so as to engage said lock up clutch, and which, when in its second switched position, switches said torque converter hydraulic fluid pressure mentioned above so as to supply it to said other channel, and drains said one channel, so as to disengage said lock up clutch, said lock up clutch control valve being switched to said first switched position thereof by supply of a control hydraulic fluid pressure, and, when said control hydraulic fluid pressure is not supplied, being switched to said second switched position thereof; and (b) a switch over valve 300 functioning as a lock up clutch interrupt valve, which is located at an intermediate point of a hydraulic fluid conduit which conducts a supply of hydraulic fluid pressure from a steady hydraulic fluid pressure source, typically the line hydraulic fluid pressure, to the lock up clutch control valve as said control hydraulic fluid pressure. Thus when the lock up clutch interrupt valve is in a switched state to allow passage of hydraulic fluid pressure therethrough, then the lock up clutch control valve is switched to its first switched position, and accordingly the lock up clutch is engaged; and, when the lock up clutch interrupt valve 300 is in a switched state to prevent passage of hydraulic fluid pressure therethrough, the lock up clutch control valve is switched to its said second switched position, and accordingly the lock up clutch is disengaged.

Further, as it is described in EP—B1—44 487 (which is a prior art according to Article 54 (3) EPC), the lock up clutch interrupt valve has typically conventionally been constructed as a spool valve including a spool element, which is axially reciprocated between two switched positions, which is impelled towards its first switched position in which said lock up clutch interrupt valve allows passage of hydraulic fluid pressure therethrough by a supply of the conventionally produced governor hydraulic fluid pressure (which is representative of the road speed of the automobile) to a pressure chamber defined at its one end, and which is impelled towards its second switched position in which said lock up clutch interrupt valve prevents passage of hydraulic fluid pressure therethrough by the compression force of a compression coil spring, said compression force being of course predetermined.

According to such a construction, when the pressure of the governor hydraulic fluid pressure is less than a predetermined pressure value, i.e. when the automobile road speed is less than a predetermined road speed value, then the force of the compression coil spring prevails over the governor hydraulic fluid pressure in its effect to move said spool element of said lock up clutch interrupt valve, and accordingly said spool element of said lock up clutch interrupt valve is switched to its said second switched position, in which said lock up clutch interrupt valve prevents supply of said source hydraulic fluid pressure to said lock up clutch control valve, and accordingly said lock up clutch control valve is switched to its said second switched position, in which the lock up clutch is disengaged; but when the pressure value of the governor hydraulic fluid pressure is greater than a predetermined pressure value, i.e. when the automobile road speed is greater than a predetermined road speed value, then the governor hydraulic fluid pressure prevails over the force of the compression coil spring in its effect to move said spool element of said lock up clutch interrupt valve, and accordingly said spool element of said lock up clutch interrupt valve is switched to its said first switched position, in which said lock up clutch interrupt valve allows supply of said source hydraulic fluid pressure to said lock up clutch control valve, and accordingly said lock up clutch control valve is switched to its said first switched position, in which the lock up clutch is engaged. Thus, the lock up clutch is engaged or disengaged, according as the vehicle road speed is above or below said predetermined road speed value.

Such a lock up clutch interrupt valve presents no substantial problems as far as concerns its switching action to transit from its said second switched position to its said first switched position, when the vehicle road speed is gradually rising and the force on said spool element of said lock up clutch interrupt valve due to said governor hydraulic fluid pressure gradually rises, and in this case the spool element of said lock up clutch interrupt valve is smoothly switched to its said first switched position, substantially as soon as the road speed of said vehicle rises above said predetermined road speed value, and accordingly said lock up clutch is reliably engaged at this time; but, on the other hand, with regard to the switching action of said lock up clutch interrupt valve to transit from its said first position to its said second position, when the vehicle road speed is gradually dropping and the force on said spool element of said lock up clutch due to said governor hydraulic fluid pressure gradually drops, in this case there is a risk, especially after a long period of use of the transmission, or when the hydraulic fluid therein has become rather old and dirty, that said spool element of said lock up clutch interrupt valve may stick in its said first switched position, and not properly transit to its said second switched position, even though the road speed of said vehicle has dropped to substantially below said predetermined road speed value. If such sticking occurs, it is quite possible for the sticking condition to be maintained, even when the vehicle comes to a complete halt; and in this case, of course, since because the lock up clutch remains engaged the slipping function of the torque converter is no longer available, the internal combustion engine of the vehicle will stall.

Further, another problem concerned with the functioning of such a lock up clutch interrupt valve is as follows. Generally the above mentioned predetermined road speed value, at a vehicle road speed above which the lock up clutch is engaged, and at a vehicle road speed below which the lock up clutch is disengaged, will be set so high that the gear transmission mechanism of the automatic transmission of the vehicle will always be in its highest speed stage when the road speed of the vehicle is equal to or greater than said predetermined road speed value. This is because the shifting of the gear transmission mechanism of the automatic transmission between its speed stages, for example between its highest speed stage and its next to highest speed stage, will cause a severe transmission shock, if the lock up clutch is engaged at the time of shifting. In other words, the torque shock cushioning effect of the torque converter is important when the gear transmission mechanism of the automatic transmission changes its speed stage, and accordingly the above mentioned predetermined road speed value is set so as high as to ensure that there should be no chance of the gear transmission mechanism shifting between its speed stages while the lock up clutch is engaged. However, in exceptional circumstances the gear transmission mechanism of the automatic transmission may be forced to shift from its highest speed stage to a lower speed stage, at a vehicle road speed higher than the predetermined road speed value; for example, when the driver of the vehicle forces such a shift, by moving the manual transmission shift lever of the vehicle from the "D" range to the "3" range. In such a case, if the lock up clutch is kept engaged, a severe transmission shock is liable to occur. This can produce various undesirable effects, such as shortening the operational life of the friction engaging mechanisms of said transmission as well as the various gears and other parts thereof, and perhaps causing premature failure of the automatic transmission as a whole, as well as damaging the drivability of the vehicle and perhaps even causing a dangerous accident.

For the foregoing reasons this known control system therefore has controlled the lock up clutch to be engaged when and only when both the highest speed stage of the gear transmission mechanism, such as an overdrive speed stage, has been engaged, and also the vehicle road speed has been greater than a certain predetermined road speed value. This has been done, for example, by controlling such a lock up clutch control vavle as described above by a control pressure which has been provided by switching an actuating hydraulic fluid pressure for a one of the friction engaging devices of the gear transmission mechanism which is engaged when and only when said highest speed stage is engaged by a lock up clutch interrupt valve whose valve element has been driven to and fro according to a balance relationship between governor hydraulic fluid pressure (indicative of vehicle road speed) and a spring force.

Such a system is satisfactory in some respects, but in fact it has been realized that it is desirable for the lock up clutch also to be engaged, in some circumstances, when a speed stage of the gear transmission mechanism other than the highest speed stage is engaged. In particular, it has been realized that it would be particularly desirable for the lock up clutch to be engaged, sometimes, when the next to the highest speed stage of the gear transmission mechanism is engaged, from the point of view of improving fuel economy of the vehicle.

However, it would not be acceptable for such an engagement of the lock up clutch to adversely affect the drivability and accelerability of the vehicle, during the engagement of such another speed stage than the highest speed stage. It should be noted that the problem of obtaining good acceleration of the vehicle is not really relevant during vehicle operation in the highest speed stage, since this speed stage is not an acceleration speed stage. However, in the lower speed stages, quick acceleration of the vehicle may be called for, and in this case the torque conversion or torque multiplication function of the torque converter is required, which means that the lock up clutch cannot be engaged at this time. Therefore a new design of lock up clutch control system is required.

Another problem that arises with a lock up clutch control system is that of the failure mode characteristic thereof. In detail, if such a control valve as a lock up clutch control valve of the sort described above should stick in its position in which it engages the lock up clutch, or the so called lock up clutch engage position, and then the vehicle speed should gradually drop until the vehicle comes almost or completely to a halt, then the problem will arise that the engine of the vehicle will snatch, stutter, or stall. This is completely unacceptable, and will render the vehicle inoperable, because the fluid clutch function of the torque converter, which allows the engine of the vehicle to continue rotating at low rotational speed when the vehicle has come to rest, is no longer available. Accordingly, some fail safe system must be provided for ensuring that, even if the lock up clutch control valve should stick, the lock up clutch cannot remain engaged when the vehicle speed is very low. Of course, in the event that, as suggested above, the lock up clutch should be engaged during the engagement of other transmission speed stages than the highest speed stage, then some form of fail safe mechanism must be provided for operation in those speed stages also.

Summary of the invention

Accordingly, it is the primary object of the present invention to provide a control system for an automatic transmission including a fluid torque converter with a lock up clutch, which meets with and overcomes the above described problems.

It is a further object of the present invention to provide a control system for an automatic transmission including a fluid torque converter with a lock up clutch, which provides lock up clutch engagement, at appropriate times and in appropriate conditions, when the gear transmission mechanism of the automatic transmission is selected to other speed stages than its highest speed stage, as well as when the automatic transmission is selected to its highest speed stage.

It is a further object of the present invention to provide a control system for an automatic transmission including a fluid torque converter with a lock up clutch, which provides lock up clutch engagement, at appropriate times and in appropriate conditions, when the gear transmission mechanism of the automatic transmission is selected to its next speed stage below its highest speed stage, as well as when the automatic transmission is selected to its highest speed stage.

It is a further object of the present invention to provide a control system for an automatic transmission including a fluid torque converter with a lock up clutch, which provides lock up clutch engagement at some times when the gear transmission mechanism of the automatic transmission is selected to other speed stages than its highest speed stage, but which disengages the lock up clutch when the torque multiplication function of the torque converter is required in such other speed stages, as during vehicle acceleration.

It is a further object of the present invention to provide a control system for an automatic transmission including a fluid torque converter with a lock up clutch, in the operation of which engagement of the lock up clutch, when the vehicle comes to a complete halt, is positively prevented.

It is a further object of the present invention to provide a control system for an automatic transmission including a fluid torque converter with a lock up clutch, in the operation of which engine stalling of the vehicle incorporating the transmission is positively prevented.

It is a further object of the present invention to provide a control system for an automatic transmission including a fluid torque converter with a lock up clutch, which positively ensures that the lock up clutch is disengaged when vehicle road speed drops to a low value.

It is a further object of the present invention to provide a control system for an automatic transmission including a fluid torque converter with a lock up clutch, which provides good drivability for the vehicle incorporating the transmission.

It is a further object of the present invention to provide a control system for an automatic transmission including a fluid torque converter with a lock up clutch, which provides a good acceleration characteristic for the vehicle incorporating the transmission.

It is a further object of the present invention to provide a control system for an automatic transmission including a fluid torque converter with a lock up clutch, in which, even if a lock up clutch control valve should stick, the vehicle incorporating the transmission should still be drivable.

It is a further object of the present invention to provide a control system for an automatic transmission including a fluid torque converter with a lock up clutch, in which, even if a lock up clutch control valve should stick, the fluid clutch function of the torque converter should still be available, for bringing the vehicle incorporating the transmission to rest, and for driving said vehicle away from rest.

It is a further object of the present invention to provide a control system for an automatic transmission including a fluid torque converter with a lock up clutch, which maximizes fuel economy of the vehicle equipped with said automatic transmission.

According to the present invention, these and other objects are accomplished by a transmission control system as defined in claim 1.

According to such a structure, provided that governor hydraulic fluid pressure is higher than said predetermined value, i.e. provided that vehicle road speed is over a first predetermined road speed value (which is typically set to be quite low), the selective disengagement and engagement of the lock up clutch is controlled according as to whether the lock up clutch control valve is respectively selected to its said first position or its said second position; and, in fact, the lock up clutch is engaged when either a first control hydraulic fluid pressure derived from said brake hydraulic fluid pressure is provided, or a second control hydraulic fluid pressure derived from said clutch hydraulic fluid pressure is provided, and is otherwise disengaged. Consequently the valve spool member of the lock up clutch control valve is shifted upward to supply said converter hydraulic fluid pressure to said first hydraulic fluid channel of the torque converter and to release the second hydraulic fluid channel to the drain when either the brake hydraulic fluid pressure, i.e. for engaging a brake in overdrive mechanism is supplied to the first chamber or the clutch hydraulic fluid pressure for engaging the clutch in the overdrive mechanism is supplied to the second chamber under the condition that the governor pressure is higher than a predetermined value, and, according to a further development of the present invention, further, in the case of the clutch hydraulic fluid pressure, under an additional condition that the throttle pressure is lower than a predetermined value, and the upshifting of the valve spool member is effected by the upward drive force applied by the brake hydraulic fluid pressure supplied to the first chamber or the clutch hydraulic fluid pressure supplied to the second chamber against not only the biasing force applied by the spring of the lock up clutch control valve but also the downward force applied by the line pressure supplied to the third chamber, so that the downward shifting of the valve spool member is effected when neither the brake hydraulic fluid pressure nor the clutch hydraulic fluid pressure are supplied to the first and second chamber by the compression spring as well as by line pressure supplied to the third chamber.

Since the supply of the brake hydraulic fluid pressure and the clutch hydraulic fluid pressure is alternaitve, it is most advantageous to construct the lock up clutch control valve according to the present invention so that the valve spool member is individually shifted up either by the brake hydraulic fluid pressure or the clutch hydraulic fluid pressure. Further, by reducing the pressure receiving surface area of the upper end portion of the valve spool member as compared with the pressure receiving surface area at its lower end portion or that of the piston member, the valve spool member can be positively driven upward and downward by the force applied by selective supply of hydraulic fluid pressure not only depending upon a spring.

With other words according to the invention the first and the second chambers are so arranged that supply of control hydraulic fluid pressure to either one of them displaces the valve spool member in the direction away from said first and the second chambers, i.e. towards said second switched position thereof. This provides a structure whereby said lock up clutch control valve is constructed to respond to either of two independent control hydraulic fluid pressures.

By the provision of the switch over valve as a lock up clutch interrupt valve with the function as indicated in claim 1 the first control hydraulic fluid pressure is generated in the proper circumstances as specified above; and the to and fro switching action of said first lock up clutch interrupt valve is effective for controlling the supply of said first control hydraulic fluid pressure.

Especial advantages are achieved with the measures of claim 2, wherein the features of claim 7 constitute the most suitable development of this embodiment.

According to the provision of such a second switch over valve designed as a lock up clutch interrupt valve with such a function, said second control hydraulic fluid pressure is generated in the proper circumstances as specified above; and the to and fro switching action of said second switch over valve is effective for controlling the generation and supply of said second control hydraulic fluid pressure. It should be noted that the second control hydraulic fluid pressure is only supplied towards said lock up clutch control valve; and in fact, as will be seen later, supply of this second control hydraulic fluid pressure may be interrupted, before it reaches said lock up clutch control valve, if governor hydraulic fluid pressure is lower than said predetermined pressure value. It should also be noted that said actuating hydraulic fluid pressure may be a hydraulic fluid pressure which is present when said gear transmission mechanism is engaged to the highest speed stage and the next to highest speed stage, as in the preferred embodiment of the present invention to be described hereinafter; or may be a hydraulic fluid pressure which is present when said gear transmission mechanism is engaged to any forward speed stage higher than a predetermined speed stage.

With the provision of a third switch over valve according to claim 4 the following functioning is achieved. Provided that vehicle road speed is over said first predetermined road speed value the lock up clutch is engaged when the gear transmission mechanism is selected to said highest speed stage thereof, when and only when said governor hydraulic fluid pressure is higher than said further predetermined pressure value which is higher than said predetermined pressure value, i.e. when vehicle speed is higher than a second predetermined road speed value which is higher than said first predetermined road speed value; and, when the gear transmission mechanism is selected to said next highest speed stage thereof, the lock up clutch is engaged, when and only when said throttle hydraulic fluid pressure is lower than said third predetermined pressure value, i.e. when vehicle throttle opening is less than a certain predetermined throttle opening. This last feature ensures that the vehicle retains good accelerability in such as speed stage below the highest speed stage.

With the design of the switch over fail safe valve according to claim 10, the selective controlling of disengagement and engagement of the lock up clutch, when the lock up clutch control valve is in its said second switched position, is controlled according as to whether the fail safe valve is respectively selected to its said first position or its said second position; and, in fact, the lock up clutch is engaged when governor pressure is greater than said predetermined pressure value, and is disengaged when governor pressure is less than said predetermined pressure value; in other words, the lock up clutch is engaged when the vehicle road speed is over a first predetermined road speed value, and is disengaged when the vehicle road speed is below said first predetermined road speed value. This ensures that the vehicle road speed cannot drop to less than said first predetermined road speed value without disengaging the lock up clutch, even if the lock up clutch control valve should become stuck in its said second position; and thus stalling or snatching of the engine of the vehicle, due to the lock up clutch improperly remaining engaged when the vehicle comes almost or completely to a standstill, is positively prevented.

With the features of claim 11 the switch over fail safe valve fulfills an additional function by preventing the supply of said second control hydraulic fluid pressure, when the vehicle road speed is below said first predetermined road speed value. This ensures that no problem can occur with regard to the lock up clutch control valve being improperly shifted, at that time.

In EP—B1—44 487 (which is a prior art according to article 54, para. 3 EPC) a transmission control system in automatic transmissions for an engine driven vehicle has been proposed which comprises the features (a) to (g) of claim 1 of this invention. Like the control device according to US—A—4 108 022 there is provided only a single lock up clutch interrupt valve. In further contrast to the subject matter of the present application the lock up clutch control valve comprises only a single valve member so that the control chambers of the present application cannot be provided.

Brief description of the drawing

The present invention will now be shown and described with reference to a preferred embodiment thereof, and with reference to the illustrative drawing. It should be clearly understood, however, that the description of the embodiment, and the drawing, are both given purely for the purposes of explanation and exemplification only, and are not intended to be limitative of the scope of the present invention in any way, since the scope of the present invention is to be defined solely by the legitimate and proper scope of the appended claims. In the drawing, the sole figure thereof is a schematic part block diagrammatical part sectional view, showing said preferred embodiment of the automatic transmission lock up clutch control system according to the present invention, with parts thereof which are per se well known in the art and conventional shown as blocks or as diagrammatic line drawings for the convenience of description, and with certain valves shown in greater detail by longitudinal cross sectional views.

Description of the preferred embodiment

The preferred embodiment of the lock up clutch control system according to the present invention will now be described with reference to the appended drawing, which is a schematic view of an automatic transmission as controlled by said preferred embodiment. In the figure, the shown automatic transmission comprises a torque converter 1, a gear transmission mechanism 2, and a hydraulic fluid pressure control system.

The torque converter

The torque converter 1 comprises a torque converter system and a lock up clutch assembly. A rotatable power input shaft 5, whose central rotational axis is indicated in the figure by the line X—X, receives supply of input rotational power (which rotates about a preferred rotational direction) from the crankshaft of an internal combustion engine of the vehicle to which the automatic transmission is fitted, neither the engine nor the crankshaft being shown in the figure. This power input shaft 5 is rotationally coupled to a housing 4 of the torque converter 1, which rotates integrally with said power input shaft 5. Said housing 4 has an end wall 4a. A pump impeller 6 formed with vanes thereon is rotationally coupled to a part on the right in the figure of the inside of the torque conveter housing 4, and may be formed integrally therewith. Coaxially with the power input shaft 5 there is provided a power output shaft 9 of the torque converter 1, and this power output shaft 9 is rotationally coupled to a turbine member with vanes formed thereon, designated in the figure by the reference numeral 7. Thus the rotational axis of this power output shaft 9, also, is the line shown by X—X in the figure. A stator member 8 with vanes formed thereon is mounted, via a one way brake 10, to a fixed member 11 of the torque converter, so as to be rotatable with respect thereto in said one preferred rotational direction only, again about the axial line shown by X—X in the figure. In a per se conventional way, the pump impeller 6, the stator member 8, and the turbine member 7 cooperate, when the housing 4 of the torque converter 1 is filled with hydraulic fluid, to define a toroidal hydraulic fluid flow circulation system, which is adapted to transfer torque in a conventional fashion between the pump impeller 6 and the turbine member 7, by circulation of hydraulic fluid between the pump impeller 6, the turbine member 7, and the stator member 8 in the general circulation fashion of a smoke ring.

**Construction of the lock up clutch assembly**

The torque converter 1 is provided with a lock up clutch assembly of a per se well known sort, which will now be explained. To the power output shaft 9 there is fixedly coupled (again coaxially about the axial line X—X) a lock up clutch plate 3, on the left hand side of which in the figure, i.e. on the side thereof closest to the end wall 4a of the torque converter housing 4, there is fixed a lining 91 made of a material adapted to frictionally engage against said end wall 4a of the torque converter housing 4. Accordingly, in combination with said end wall 4a, said clutch plate 3 constitutes a lock up clutch assembly, which, when and only when said clutch plate 3 is impelled towards said end wall 4a, in a manner which will be explained hereinafter, rotationally directly engages said clutch plate 3 to said torque converter housing 4, i.e. rotationally directly engages together said power input shaft 5 and said power output shaft 9.

The lock up clutch assembly is engaged and disengaged by the direction of supply of actuating hydraulic fluid pressure thereto, in a selective fashion, as will now be explained. Two hydraulic fluid apertures, a first hydraulic fluid aperture 12 and a second hydraulic fluid aperture 13, are provided for conducting hydraulic fluid into and out of the inside space within the torque converter housing 4, at parts of the torque converter housing 4 near the central rotational axis X—X thereof. In fact, these apertures 12 and 13 are only schematically shown in the drawing; the practical form of construction therefor, as is per se well known in the art, is for these apertures 12 and 13 to open to the inner space within the torque converter housing 4 from within openings in shafts which extend along the axis of the torque converter, for instance from within central axial holes through the power input shaft 5 and/or the power output shaft 9 of the torque converter 1. The first hydraulic fluid aperture 12 opens to the part of the space within the torque converter housing 4 which lies to the right of the clutch plate 3 in the figure, and which is designated by the reference numeral 14, and the second hydraulic fluid aperture 13 opens to the part of the space within the torque converter housing 4 which lies between the end wall 4a of the torque converter housing 4 and the clutch plate 3 in the figure, to the left of the clutch plate 3 in the figure, said space being designated by the reference numeral 15.

**Operation of the lock up clutch assembly**

Accordingly, when a flow of hydraulic fluid is supplied into the interior space 15 of the torque converter housing 4 which lies between the end wall 4a of the torque converter housing 4 and the clutch plate 3 in the figure in through the second hydraulic fluid aperture 13, and is taken out of the interior space 14 of the torque converter housing 4 which lies to the right of the clutch plate 3 in the figure from the first hydraulic fluid aperture 12, this flow of hydraulic fluid of course serving to fill the inside of the torque converter housing 4 with hydraulic fluid as is required for its operation, then the excess of the fluid pressure on the left side in the figure of the clutch plate 3 over the fluid pressure on the right side thereof, due to the rather restricted size of the space available for passage of hydraulic fluid past the lining 91, between said lining 91 and the end wall 4a of the torque converter housing 4, ensures that the clutch plate 3 as a whole is biased to the right in the figure, and does not substantially touch the end wall 4a of the torque converter housing 4, via the lining 91. In this operational state, the clutch plate 3 and the torque converter housing 4 are not substantially mechanically rotationally coupled together, and accordingly the power input shaft 5 and the power output shaft 9 of the torque converter 1 are not mechanically coupled together with regard to their rotation, but instead are only rotationally coupled together via the aforementioned circulation of hydraulic fluid within the torque converter 1, i.e. are only rotationally coupled together in a torque converting fashion, according to the normal per se well known functioning of the torque converter 1. In other words, the lock up clutch assembly is disengaged, by the supply of hydraulic fluid into the interior space 15 of the torque converter housing 4 in through the second hydraulic fluid aperture 13, and the taking of hydraulic fluid out of the interior space 14 of the torque converter housing 4 from the first hydraulic fluid aperture 12.

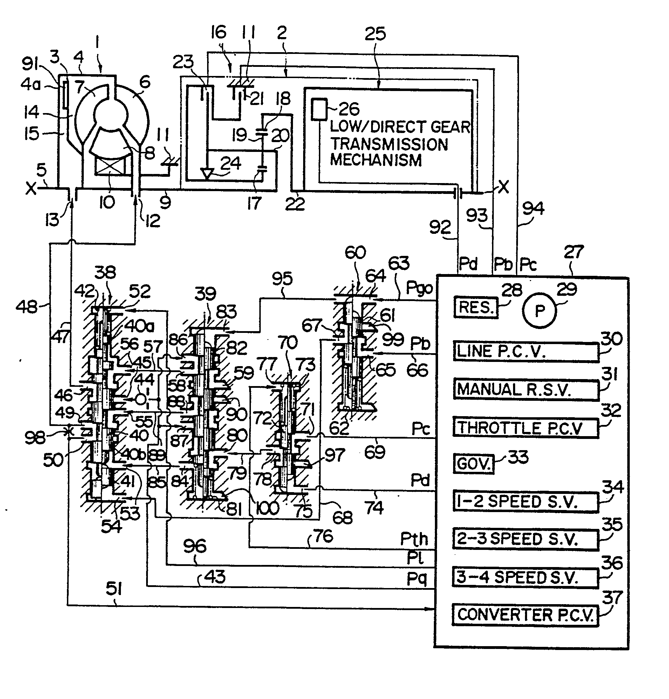

On the other hand, when a flow of hydraulic fluid is supplied into the interior space 14 of the torque converter housing which lies to the right of the clutch plate 3 in the figure 4 in through the first hydraulic fluid aperture 12, and is taken out of the interior space 15 of the torque converter housing 4 which lies between the end wall 4a of the torque converter housing 4 and the clutch plate 3 in the figure from the second hydraulic fluid aperture 13, this flow of hydraulic fluid again of course serving to fill the inside of the torque converter housing 4 with hydraulic fluid as is required for its operation, then the excess of the fluid pressure on the right side in the figure of the clutch plate 3 over the fluid pressure on the left side thereof, due to the rather restricted size of the space available for passage of hydraulic fluid past the lining 91, between said lining 91 and the end wall 4a of the torque converter housing 4, ensures that the clutch plate 3 as a whole is biased to the left in the figure, and is pressed tightly against the end wall 4a of the torque converter housing 4, via the lining 91. In this operational state, the clutch plate 3 and the torque converter housing 4 are mechanically rotationally coupled together, and accordingly the power input shaft 5 and the power output shaft 9 of the torque converter 1 are mechanically coupled together with regard to their rotation, and their rotational coupling together by the circulation of hydraulic fluid within the torque converter 1, according to the normal per se well known functioning of the torque converter 1, ceases to be of any importance. In this condition, the circulation of hydraulic fluid within the torque converter 1 soon ceases, and the body of hydraulic fluid within the housing 4 of the torque converter 1, the housing 4, the pump impeller 6, the turbine member 7, and the stator member 8 soon are rotating together as one unit, all at substantially the same rotational speed. In other words, the lock up clutch assembly is engaged, by the supply of hydraulic fluid into the interior space 14 of the torque converter housing 4 in through the first hydraulic fluid aperture 12, and the taking of hydraulic fluid out of the interior space 15 of the torque converter housing 4 from the second hydraulic fluid aperture 13. This mode of engaging and disengaging the lock up clutch assembly is per se well known in the art.

As will be seen later, the lock up clutch assembly is engaged, during highest speed stage or overdrive speed stage operation of the gear transmission mechanism 2, when and only when the vehicle road speed is higher than a certain predetermined value; and the lock up clutch assembly is engaged, during next to highest speed stage operation or directly connected speed stage operation of the gear transmission mechanism 2, when and only when the vehicle road speed is higher than another certain predetermined value and also the throttle opening is less than a certain predetermined value. Thus, when the lock up clutch assembly is to be engaged, i.e. when a flow of hydraulic fluid is being supplied into the interior space 14 of the torque converter housing 4 in through the first hydraulic fluid aperture 12, and is being taken out of the other interior space 15 of the torque converter housing 4 from the second hydraulic fluid aperture 13, then typically the vehicle incorporating this transmission is operating at fairly high engine rotational speed. On the other hand, when the lock up clutch assembly is to be disengaged, i.e. when a flow of hydraulic fluid is being supplied into the interior space 15 of the torque converter housing 4 in through the second hydraulic fluid aperture 13, and is being taken out of the other interior space 14 of the torque converter housing 4 from the first hydraulic fluid aperture 12, then typically the internal combustion engine of the vehicle incorporating this transmission is being operated at quite low engine rotational speed or at idling speed. As stated above, the exception to this is when the vehicle is being accelerated hard, i.e. with high throttle opening, in the next to highest speed stage or the directly connected speed stage of the gear transmission mechanism 2, in which case the lock up clutch is disengaged, even though the engine rotational speed may be high. This is done in order to obtain the beneficial accelerating effects of torque multiplication provided by the torque converter 1, and will be explained in more detail later.

The gear transmission mechanism

The gear transmission mechanism 2 is only shown as a schematic block in the drawing, because many versions thereof are already per se well known and conventional. This gear transmission mechanism 2 is made up of an overdrive mechanism 16 and a low/direct gear mechanism 25. The power output shaft 9 of the torque converter 1 also serves as the power input shaft for the overdrive mechanism 16, and the overdrive mechanism 16 has a power output shaft 22 which also serves as the power input shaft for the low/direct gear mechanism 25, said shaft 22, again, being rotatable about its central rotational axis which lies along the axial line shown by X—X in the figure.

Construction of the overdrive mechanism

The overdrive mechanism 16 will now be described. This overdrive mechanism 16 comprises an overdrive casing 11. The shaft 9, which serves to transmit rotational power from the torque converter 1 to the overdrive mechanism 16, is connected to a carrier 20 of a planetary gear mechanism of the overdrive mechanism 16, and on the carrier 20 there is rotatably mounted a planetary pinion 19. Of course, in fact, several planetary pinions such as the planetary pinion 19 are incorporated in this planetary gear mechanism, but only one of them is schematically shown in the figure. This planetary pinion 19 rotates in a per se conventional way around a sun gear 17, with which its inside is meshed; and the outside of the planetary pinion 19 is meshed with a ring gear 18. Between the sun gear 17 and the carrier 20 there are provided, in parallel, a one way clutch 24 for always rotationally connecting them together in one rotational direction only, and a multi plate clutch 23 for selectively rotationally connecting them together in both rotational directions; and further between the sun gear 17 and the casing 11 of the overdrive mechanism 16 there is provided a multi plate brake 21, for selectively rotationally connecting them together in both rotational directions. The multi plate brake 21 and the multi plate clutch 23 are both of them constituted as hydraulic fluid pressure activated friction engaging mechanisms of per se well known sorts, and are both of them adapted to be selectively engaged and disengaged by selective supply of hydraulic fluid pressures Pb and Pc respectively thereto, via hydraulic fluid conduits 93 and 94 respectively, from a hydraulic fluid pressure transmission control system 27, as will be explained later. The ring gear 18 is connected to the above mentioned shaft 22, which as explained above serves as the power output shaft of the overdrive mechanism 16.

Operation of the overdrive mechanism

Thus, when actuating hydraulic fluid pressure Pb is supplied from the hydraulic fluid pressure control system 27 via the hydraulic fluid conduit 93 to the multi plate brake 21 of the overdrive mechanism 16, so that the multi plate brake 21 is engaged, and no actuating hydraulic fluid pressure Pc is supplied from the hydraulic fluid pressure control system 27 via the hydraulic fluid conduit 94 to the multi plate clutch 23 of the overdrive mechanism 16, so that the multi plate clutch 23 is disengaged, then the sun gear 17 is rotationally fixed to the housing 11 of the overdrive mechanism 16, while the carrier 20 is free to rotate with respect to the sun gear 17 and the housing 11 in the rotational direction which is the one required for forward operation, and accordingly in a per se well known way the overdrive mechanism 16 operates (during forward vehicle operation only) in its mode of increasing rotational speed, in which its power output shaft 22 rotates at a higher rotational speed than does its power input shaft 9. On the other hand, when no actuating hydraulic fluid pressure Pb is supplied from the hydraulic fluid pressure control system 27 via the hydraulic fluid conduit 93 to the multi plate brake 21 of the overdrive mechanism 16, so that the multi plate brake 21 is disengaged, and actuating hydraulic fluid pressure Pc is supplied from the hydraulic fluid pressure control system 27 via the hydraulic fluid conduit 94 to the multi plate clutch 23 of the overdrive mechanism 16, so that the multi plate clutch 23 is engaged, then the sun gear 17 is rotationally fixed to the carrier 20 in both rotational directions, while this rotationally coupled combination of the sun gear 17 and the carrier 20 is free to rotate with respect to the housing 11 of the overdrive mechanism 16, and accordingly in a per se well known way the overdrive mechanism 16 operates in its mode of providing direct rotational coupling, in which its power output shaft 22 rotates at the same rotational speed as does its power input shaft 9.

Function of the low/direct gear transmission mechanism

Now the low/direct gear transmission mechanism 25 will be described, with regard to its function. The low/direct gear transmission mechanism 25 incorporates several per se well known hydraulic fluid pressure activated friction engagement mechanisms such as multi plate clutches and multi plate brakes, one of which is schematically shown by a block denoted by the reference numeral 26 in the drawing, and, according to selective supply of one or another particular combination of activating hydraulic fluid pressures such as the hydraulic fluid pressure Pd from the hydraulic fluid pressure control system 27 which will be described hereinafter to various combinations of these friction engagement mechanisms such as the friction engagement mechanism 26 via hydraulic fluid conduits such as a hydraulic fluid conduit 92 which leads to said friction engagement mechanism 26, in a per se well known way the low/direct gear transmission mechanism 25 is controlled to provide one or another of a plurality of different transmission ratios, including a directly connected transmission ratio and various speed reduction ratios, between its power input shaft 22 and its power output shaft, which is not particularly shown in the figure but which again rotates about the axis shown by the line X—X in the figure. The hydraulic fluid pressure activated friction engagement mechanism 26 is selectively supplied with its said activating hydraulic fluid pressure Pd, or alternatively is relieved of said supply of hydraulic fluid pressure Pd, via the hydraulic fluid conduit 92, and, when the hydraulic fluid pressure activated friction engagement mechanism 26 is so supplied with activating hydraulic fluid pressure Pd, and appropriate combinations of the other hydraulic fluid pressure activated friction engagement mechanisms which are not particularly shown of the low/direct gear transmission mechanism 25 are supplied with activating hydraulic fluid pressures via conduits which are also not shown, then the low/direct gear transmission mechanism 25 is controlled to provide its directly connected speed stage, in which its power output shaft rotates at the same rotational speed as does its power input shaft 22; while, on the other hand, when the hydraulic fluid pressure activated friction engagement mechanism 26 is not supplied with such activating hydraulic fluid pressure Pd, and various other appropriate combinations of the other hydraulic fluid pressure activated friction engagement mechanisms of the low/direct gear transmission mechanism 25 are supplied with activating hydraulic fluid pressures, then the low/direct gear transmission mechanism 25 is controlled to provide various reducing speed stages, in which its power output shaft rotates at a lower rotational speed than does its power input shaft 22. In other words, the hydraulic fluid pressure activated friction engagement mechanism 26 is supplied with its activating hydraulic fluid pressure Pd, when and only when the low/direct gear transmission mechanism 25 is providing its directly connected speed stage. With regard to the overall operation of the gear transmission mechanism 2, therefore, the hydraulic fluid pressure activated friction engagement mechanism 26 is supplied with its activating hydraulic fluid pressure Pd, when and only when either the gear transmission mechanism 2 is providing its highest speed stage or its overdrive speed stage, or when the gear transmission mechanism 2 is providing its next to highest speed stage or its directly connected speed stage; and in the former of these cases the activating hydraulic fluid pressure Pb is being also provided to the multi plate brake 21, while in the latter of these cases the activating hydraulic fluid pressure Pc is being also provided to the multi plate clutch 23.

The hydraulic fluid pressure control system

The above mentioned hydraulic fluid pressure control system 27 is only shown by a block in the drawing, because such hydraulic fluid pressure control systems are already per se well known in various different forms. Further, the various elements of the hydraulic fluid pressure control system 27 are also only shown by blocks in the drawing, because these elements likewise are already per se well known in various different forms. Elements of the hydraulic fluid pressure control system 27 receive supply of pressurized hydraulic fluid, which is picked up from a hydraulic fluid reservoir 28 and is initially pressurized by a hydraulic fluid pump 29, via a line hydraulic fluid pressure control valve 30, which controls the pressure of this initially pressurized hydraulic fluid to a controlled line hydraulic fluid pressure Pl by releasing a part of this initially pressurized hydraulic fluid to a relief passage not shown in the figure which leads back to said hydraulic fluid reservoir 28. Further, the hydraulic fluid pressure control system 27 comprises a torque converter hydraulic fluid pressure control valve 37, which receives supply of said hydraulic fluid which is being released from the line hydraulic fluid pressure control valve 30, said torque converter hydraulic fluid pressure control valve 37 controlling the pressure of this released hydraulic fluid to a controlled torque converter hydraulic fluid pressure Pq, which is of course lower than the above mentioned line hydraulic fluid pressure Pl. The hydraulic fluid pressure control system 27 may also control in a varying fashion the standard value Pl of the line hydraulic fluid pressure and the standard value Pq of the torque converter hydraulic fluid pressure, according to various different operational considerations of the transmission system and of the vehicle incorporating it, but this is not strictly relevant to the present invention.

Further, the hydraulic fluid pressure control system 27 comprises a throttle hydraulic fluid pressure control valve 32 of a per se well known sort, which produces a throttle hydraulic fluid pressure Pth by regulating the line hydraulic fluid pressure Pl produced by the line hydraulic fluid pressure control valve 30 according to the current amount of depression of a throttle pedal (not shown) of the vehicle incorporating this transmission system, and also comprises a governor hydraulic fluid pressure control valve 33, also of a per se well known sort, which similarly produces a governor hydraulic fluid pressure Pgo by regulating the line hydraulic fluid pressure Pl produced by the line hydraulic fluid pressure control valve 30 according to the current value of the road speed of the vehicle incorporating this transmission system. Yet further, the hydraulic fluid pressure control system 27, as mentioned above, selectively provides supplies of the line hydraulic fluid pressure Pl as actuating hydraulic fluid pressures such as Pb, Pc, and Pd to the various friction engaging mechanisms of the gear transmission mechanism 2, including the multi plate brake 21 and the multi plate clutch 23 of the overdrive mechanism 16, and the friction engaging mechanism 26 of the low/direct gear transmission mechanism 25, via hydraulic fluid conduits such as the hydraulic fluid conduits 92, 93, and 94 (the others of these friction engaging mechanisms and hydraulic fluid conduits not being shown), according to various different operational conditions of the vehicle incorporating this transmission, said operational conditions including the current range of transmission speeds such as "D" range and "L" range manually selected by the driver of the vehicle on a manual range selection valve 31 comprised in the hydraulic fluid pressure control system 27, and the current values of accelerator pedal depression and vehicle road speed. To this end, as is per se well known in the art, the hydraulic fluid pressure control system 27 switches said supplies Pb, Pc, Pd, etc. of the line hydraulic fluid pressure Pl according to the switching actions of a first/second speed switching valve 34, a second/third speed switching valve 35, and a third/fourth speed switching valve 36, each of said switching valves 34, 35, and 36 comprised in the hydraulic fluid pressure control system 27 being supplied with the above specified throttle hydraulic fluid pressure Pth and governor hydraulic fluid pressure Pgo in such a way that these hydraulic fluid pressures Pth and Pgo oppose one another in their effects thereon, and each of said switching valves 34, 35, and 36 being switched between its two switched states according to its own particular balance relationship between said throttle hydraulic fluid pressure Pth and said governor hydraulic fluid pressure Pgo. The hydraulic fluid pressure control system 27 also supplies a supply of the torque converter hydraulic fluid pressure Pq to the lock up clutch assembly, described above, of the torque converter 1, via a hydraulic fluid conduit 43, a lock up clutch control valve 38, and sometimes via a fail safe valve 39 which will be all hereinafter described in detail, so as to operate said lock up clutch assembly to be either engaged or disengaged, according to the switching positions of said lock up clutch control valve 38 and said fail save valve 39. This function will be explained in detail later. Further, the hydraulic fluid pressure control system 27 supplies various hydraulic fluid pressures for controlling a first lock up clutch interrupt valve 60, a second lock up clutch interrupt valve 70, and said fail safe valve 39, and for being switched by said first lock up clutch interrupt valve 60, said second lock up clutch interrupt valve 70, and said fail safe valve 39, via hydraulic fluid conduits 63, 66, 69, 74, and 76, as will all also be explained in detail later.

Construction of the lock up clutch control valve

Now the lock up clutch control valve 38 will be described. This lock up clutch control valve 38 comprises a valve housing in which there is formed a bore, and a valve spool member 40 which is slidingly fitted into said bore, so as to reciprocate in the upwards and downwards directions as seen in the drawing. Below said valve spool member 40 in said bore, there is also slidingly fitted within said bore a piston member 41, the upper end of which in the drawing contacts the lower end of the valve spool member 40. The upper end in the drawing of the valve spool member 40 is formed with an upper land portion 40a, and the lower end in the drawing of the valve spool member 40 is formed with a lower land portion 40b, the diameter of said lower land portion 40b and the diameter of the piston member 41 being substantially equal, and both these diameters being substantially larger than the diameter of the upper land portion 40a. Further, a compression coil spring 42 is provided above said valve spool member 40 in said bore of said lock up clutch control valve 38, so as to bias said valve spool member 40 and said piston member 41 in the downwards direction as seen in the drawing. The top end of said compression coil spring 42 bears on the top end of said bore. At the upper end of said bore of said lock up clutch control valve 38 as seen in the drawing, above said valve spool member 40, there is thus defined within said valve bore a first pressure chamber, to which a biasing port 52 communicates, the pressure within this first pressure chamber acting on the combination of the valve spool member 40 and the piston member 41 over an effective pressure receiving area defined by the diameter of the smaller upper land portion 40a, so as to bias them downwards as seen in the drawing; at the lower end of said valve bore as seen in the drawing, below said piston member 41, there is defined within said valve bore a second pressure chamber, to which a lower control port 54 communicates, the pressure within this second pressure chamber acting on the combination of the valve spool member 40 and the piston member 41 over an effective pressure recieving area defined by the diameter of the piston member 41 which is substantially equal to the diameter of the larger lower land portion 40b of the valve spool member 40, so as to bias them upwards as seen in the drawing; and, at an intermediate part of said bore of said lock up clutch control valve 38 as seen in the drawing, below said valve spool member 40 and above said piston member 41, there is defined within said valve bore a third pressure chamber, to which an intermediate control port 53 communicates, the pressure within this third pressure chamber acting on both the valve spool member 40 and the piston member 41 over effective pressure receiving areas defined substantially by the diameter of the larger lower land portion 40b of the valve spool member 40, so as to bias the valve spool member 40 upwards as seen in the drawing, and so as to bias the piston member 41 downwards as seen in the drawing. The valve spool member 40 and the piston member 41 can move either to downwardly biased positions within the valve bore of the lock up clutch control valve 38, as seen to the left of the central axis of said bore in the drawing, or to upwardly biased positions within said valve bore, as seen to the right of the central axis of said valve bore in the drawing.

Operation of the lock up clutch control valve

The line hydraulic fluid pressure Pl is always supplied to the biasing port 52 of the lock up clutch control valve 38, via a hydraulic fluid conduit 96, from the hydraulic fluid pressure control system 27, and thus to said first pressure chamber defined at the upper end of the valve bore of said lock up clutch control valve 38. Thus, when actuating hydraulic fluid pressure substantially equal to said line hydraulic fluid pressure Pl is also supplied, via a hydraulic fluid conduit 68 as will be explained later, from a port 67 of the first lock up clutch interrupt valve 60 via a hydraulic fluid conduit 68 to said lower control port 54 opening to said second pressure chamber defined at the bottom of said valve bore of the lock up clutch control valve 38, because of the above mentioned substantial difference between the diameter of the piston member 41 and the diameter of the upper land portion 40a of the valve spool member 40, the valve spool member 40 and the piston member 41 are both positively and definitely driven upwards as seen on the right of the central axis of the bore of the direct clutch control valve 38 in the drawing against the biasing action of the compression coil spring 42 which is overcome, and against the force due to said line hydraulic fluid pressure Pl which is as explained above always provided via the hydraulic fluid conduit 96 to the first pressure chamber defined at the top of said valve bore to which the biasing port 52 communicates; further, when actuating pressure substantially equal to said line hydraulic fluid pressure Pl is supplied, from a port 84 of the fail safe valve 39 and via a hydraulic fluid conduit 85 as will be explained later, to said third pressure chamber defined at the intermediate portion of said valve bore of this lock up clutch control valve 38 to which the intermediate control port 53 communicates, because of the above mentioned substantial difference in the diameters of the lower land portion 40b of the valve spool member 40 and of the upper land portion 40a thereof, the valve spool member 40 is again positively and definetely driven upwards as seen on the right of the central axis of the bore of the direct clutch control valve 38 in the drawing against the biasing action of the compression coil spring 42 which is overcome, and against the force due to said line hydraulic fluid pressure Pl which is as explained above always provided to the first pressure chamber defined at the top of said valve bore to which the biasing port 52 communicates, while the piston member 41 is driven downwards as seen on the left of the axis of the valve bore in the drawing; but, on the other hand, when no actuating pressure substantially equal to said line hydraulic fluid pressure Pl is supplied either to the second pressure chamber defined at the bottom of said valve bore in the drawing to which the lower control port 54 communicates or to the third pressure chamber defined at said intermediate portion thereof to which the intermediate control port 53 communicates, then the valve spool member 40 and the piston member 41 are both driven downwards as seen on the left of the valve bore in the drawing by the line hydraulic fluid pressure Pl always supplied to the first pressure chamber defined at the top of said valve bore to which the biasing port 52 communicates, with the aid of the biasing action of the compression coil spring 42. Thus, it will be seen that sticking of the valve spool member 40 and the piston member 41 of the lock up clutch control valve 38 in either of their switched positions is strongly guarded against, because the action of the compression coil spring 42 is not particularly relied upon for biasing said valve spool member 40 and said piston member 41; and it will be seen that said valve spool member 40 and said piston member 41 are moved between their upwardly biased positions and their downwardly biased positions within the valve bore of said lock up clutch control valve 38, according as to whether line hydraulic fluid pressure is or is not supplied either to said second pressure chamber defined at the lower end of said valve bore to which said lower control port 54 communicates or to said third pressure chamber defined at the intermediate portion of said valve bore to which said intermediate control port 53 communicates. This particular inventive concept relating to the biasing of the lock up clutch control valve not merely by a spring but by a biasing pressure supplied to a biasing port is not the invention of the present application.

The lock up clutch control valve 38 is provided with six switched ports 45, 46, 49, 50, 55, and 56. When the valve spool member 40 is in its downwardly biased position within the valve bore as seen on the left of the central axis of the valve bore in the drawing, then the ports 55 and 56 are not connected to any other ports, while the ports 45 and 46 are communicated to one another, and the ports 49 and 50 are also communicated to one another. On the other hand, when the valve spool member 40 is in its upwardly biased position within the valve bore of the lock up clutch control valve 38 as seen on the right of the central axis of the valve bore in the drawing, then the port 45 and the port 50 are not connected to any other ports, while the ports 46 and 56 are communicated to one another, and the ports 49 and 55 are also communicated to one another.

Connections of the lock up clutch control valve

These switching ports of the lock up clutch control valve 38 are connected as follows. The lower control port 54 is connected, via a hydraulic fluid conduit 68, ports 67 and 65 of a first lock up clutch interrupt valve 60 which will be explained later, and a hydraulic fluid conduit 66, to the hydraulic fluid pressure control system 27, for selectively receiving supply of switching hydraulic fluid pressure Pb for switching the lock up control valve 38, as will be explained in detail in what follows with respect to the operation of this preferred embodiment of the automatic transmission lock up clutch control system according to the present invention. The biasing port 52 is connected, via the above mentioned hydraulic fluid conduit 96, to the hydraulic fluid pressure control system 27, for always receiving biasing supply of line hydraulic fluid pressure Pl, as explained above. The intermediate control port 53 is connected, via a hydraulic fluid conduit 85, to a port 84 of the fail safe valve 39 which will be explained in detail later. The port 45 is connected via a one way valve 44 and a hydraulic fluid conduit 43 to the hydraulic fluid pressure control system 27, for always receiving supply of the torque converter hydraulic fluid pressure Pq. The port 46 is connected via a hydraulic fluid conduit 47 to the second hydraulic fluid aperture 13, already mentioned, which leads to the interior space 15 within the torque converter housing 4 which lies between the end wall 4a of the torque converter housing 4 and the clutch plate 3 in the figure, to the left of the clutch plate 13. The port 49 is connected via a hydraulic fluid conduit 48 to the first hydraulic fluid aperture 12, already mentioned, which leads to the interior space 14 within the torque converter housing 4 which lies to the right of the clutch plate 3 in the figure. The port 50 is connected, via a hydraulic fluid conduit 51, to the input side of a hydraulic fluid cooler, comprised in the hydraulic fluid pressure control system 27 but not particularly shown in the drawing, the output side of which is drained to the hydraulic fluid reservoir 28. Further, this hydraulic fluid conduit 51 is also communicated, via a restricted orifice 98, to the port 49 of the lock up clutch control valve 38. The port 55 is connected, via a hydraulic fluid conduit 89, to a port 88 of the fail safe valve 39. And the port 56 is connected, via a hydraulic fluid conduit 57, to another port 58 of the fail safe valve 39.

Function of the lock up clutch control valve

First, the case will be explained in which the valve spool member 40 of the lock up clutch control valve 38 is in its downwardly biased position within the valve bore thereof, as seen to the left of the central axis of this valve bore in the drawing. It will shortly be seen that in this case, definitely, the lock up clutch assembly of the torque converter 1 will be activated to be in its disengaged operational condition.

In this case, no actuating supply of hydraulic fluid pressure is being supplied from the first lock up clutch interrupt valve 60 via the hydraulic fluid conduit 68 to the lower control port 54 of the lock up clutch control valve 38 or to the second pressure chamber defined at the bottom of the valve bore thereof to which said lower control port 54 opens, and no actuating supply of hydraulic fluid pressure is being supplied from the port 84 of the fail safe valve 39 via the hydraulic fluid conduit 85 and via the intermediate control port 53 of the lock up clutch control valve 38 to the third pressure chamber defined at the intermediate portion of the valve bore thereof to which said intermediate control port 53 opens; and thus, because the hydraulic fluid pressure control system 27 still of course is sending supply of the line hydraulic fluid pressure Pl to the biasing port 52 of the lock up clutch control valve 38, accordingly by the biasing actions of the compression coil spring 42 and of the pressure of this line hydraulic fluid pressure Pl, the valve spool member 40 of the lock up clutch control valve 38 and the piston member 41 thereof are both shifted downwards as seen in the drawing to their positions as seen on the left of the central axis of the valve bore in the drawing. In this state, the hydraulic fluid pressure control system 27 supplies the torque converter hydraulic fluid pressure Pq via the hydraulic fluid conduit 43 and the one way valve 44 to the port 45 of the lock up clutch control valve 38, whence this pressure is transmitted to the port 46 thereof, whence it is transmitted, via the hydraulic fluid conduit 47, to the second hydraulic fluid aperture 13 of the torque converter housing 4. Hydraulic fluid therefore passes in through this second hydraulic fluid aperture 13 to the space 15 inside of the torque converter housing 4 to the left in the drawing of the lock up clutch plate 3, between the lock up clutch plate 3 and the end wall 4a of the torque converter housing 4, fills the inside of the torque converter housing 4 as is of course required, flows past the outer edge of the lock up clutch plate 3, between the lining 91 mounted on this outer edge and the end wall 4a of the torque converter housing 4, to the space 14 inside the torque converter housing 4 to the right in the drawing of the lock up clutch plate 3, and is taken out from the first hydraulic fluid aperture 12 from this space 14 inside of the torque converter housing 4 to the right in the drawing of the lock up clutch plate 3. From this first hydraulic fluid aperture 12, said hydraulic fluid flow is passed through the conduit 48 to the port 49 of the lock up clutch control valve 38, whence it is communicated to the port 50 thereof, whence it is drained to the hydraulic fluid reservoir 28 via the hydraulic fluid conduit 51 and the hydraulic fluid cooler, not shown.

This flow of hydraulic fluid, as explained above, causes an excess of hydraulic fluid pressure on the left side in the figure of the clutch plate 3 over the hydraulic fluid pressure on the right side thereof, due to the rather restricted size of the space available for passage of hydraulic fluid past the lining 91, between said lining 91 and the end wall 4a of the torque converter housing 5, and this pressure difference ensures that the clutch plate 3 as a whole is biased to the right in the figure, and is pressed away from the end wall 4a of the torque converter housing 4, and does not rotationally engage said end wall 4a via the lining 91, thus causing the clutch plate 3 and the torque converter housing 4 not to be mechanically rotationally coupled together. Accordingly the pump impeller 6 and the turbine member 7 of the torque converter 1 are not mechanically coupled together with regard to their rotation, but are only rotationally coupled together via the circulation of hydraulic fluid within the torque converter 1, i.e. are only rotationally coupled together in a torque converting fashion, according to the normal per se well known functioning of the torque converter 1. In other words, the lock up clutch assembly is disengaged, by the supply of hydraulic fluid into the interior of the torque converter housing 4 in through the second hydraulic fluid aperture 13, and the taking of hydraulic fluid out of the interior of the torque converter housing 4 from the first hydraulic fluid aperture 12.

In this state, the port 49 of the lock up clutch control valve 38 is communicated to the port 50, and flow of hydraulic fluid from the inside of the torque converter 1 is therefore passed through the hydraulic fluid cooler incorporated in the hydraulic fluid pressure control system 27. At this time, since the lock up clutch assembly is disengaged, only the circulation of hydraulic fluid within the torque converter 1 is operating to rotationally couple together the pump impeller 6 and the turbine member 7, as explained above, and accordingly the body of hydraulic fluid within the housing 4 of the torque converter 1 is being substantially churned by the pump impeller 6, the turbine member 7, and the stator member 8, all these members being in rotation at somewhat different rotational speeds, and accordingly considerable heat is being generated within the torque converter 1 by this churning of hydraulic fluid therein, because considerable frictional loss is occurring in the torque converter 1, the actual amount of heat which is being generated of course being related to the actual rotational speed of the power input shaft 5 and the actual rotational speed of the power output shaft 11 of the torque converter 1, as well as to the load being transmitted therebetween. Therefore, a considerable cooling effect may well be necessary from the hydraulic fluid cooler at this time.

Now, the case will be considered in which the valve spool member 40 of the lock up clutch control valve 38 is in its upwardly biased position within the valve bore thereof, as seen to the right of the central axis of this valve bore in the drawing. It will be seen that in this case the lock up clutch assembly may be activated to be either in its engaged or its disengaged operational condition, according to the position of the valve spool member 82 of the fail safe valve 39; and this will be explained in more detail later.

In this case, either an actuating supply of hydraulic fluid pressure Pb of pressure magnitude substantially equal to the line hydraulic fluid pressure Pl is being supplied from the first lock up clutch interrupt valve 60 via the hydraulic fluid conduit 68, as will be explained later, to the lower control port 54 of the lock up clutch control valve 38, this hydraulic fluid pressure present within the second pressure chamber defined at the bottom of the valve bore of said lock up clutch control valve 38 driving the valve spool member 40 and the piston member 41 of the lock up clutch control valve 38 upwards as seen in the drawing to their positions as seen on the right of the central axis of the valve bore in the drawing against the biasing actions of the compression force of the compression coil spring 42 and of the line hydraulic fluid pressure Pl which is present within the first pressure chamber at the top of the bore of the lock up clutch control valve 38 which are overcome; or, alternatively, an actuating supply of hydraulic fluid pressure of pressure magnitude substantially equal to the line hydraulic fluid pressure Pl is being supplied from the fail safe valve 39 via the hydraulic fluid conduit 85, as also will be explained later, to the intermediate control port 53 of the lock up clutch control valve 38, this hydraulic fluid pressure present within the third pressure chamber defined at the intermediate portion of the valve bore of said lock up clutch control valve 38 driving the valve spool member 40 of the lock up clutch control valve 38 upwards as seen in the drawing to its position as seen on the right of the central axis of the valve bore in the drawing against the biasing actions of the compression force of the compression coil spring 42 and of the line hydraulic fluid pressure Pl which is present within the first pressure chamber at the top of the bore of the lock up clutch control valve 38 which are overcome, while driving the piston member 41 downwards as seen in the drawing to its position as seen on the left of the central axis of the valve bore in the drawing. In either case, given that the valve spool member 40 of the lock up clutch control valve 38 is in its upwardly biased position within the valve bore thereof, the port 56 of the lock up clutch control valve 38 is communicated to the port 46 thereof and thence via the hydraulic fluid conduit 47 is communicated to the second hydraulic fluid aperture 13 of the torque converter housing 4. Further, the port 55 of the lock up clutch control valve 38 is communicated to the port 49 thereof and thence via the hydraulic fluid conduit 48 is communicated to the first hydraulic fluid aperture 12 of the torque converter housing 4.

The port 56 of the lock up clutch control valve 38 is connected via the hydraulic fluid conduit 57 to the port 58 of the fail safe valve 39, and the port 55 of the lock up clutch control valve 38 is connected via the hydraulic fluid conduit 89 to the port 88 of the fail safe valve 39. As will be explained later with respect to the functioning of the fail safe valve 39, as the valve spool member 82 of this fail safe valve 39 moves between its upper and its lower positions within the bore thereof, respectively either the torque converter hydraulic fluid pressure Pq is supplied to the port 58 thereof from the port 86 thereof and the port 88 thereof is drained via the drain port 90 thereof, or the torque converter hydraulic fluid pressure Pq is supplied to the port 88 thereof from the port 87 thereof and the port 58 thereof is drained via the drain port 59 thereof.

Thus, according as the valve spool member 82 of this fail save valve 39 moves between its upper and its lower positions within the bore thereof, either: (a) the hydraulic fluid pressure control system 27 supplies the torque converter hydraulic fluid pressure Pq to the port 56 of the lock up clutch control valve 38, whence this pressure is transmitted to the port 46 thereof, whence it is transmitted as in the previous case, via the hydraulic fluid conduit 47, to the second hydraulic fluid aperture 13 of the torque converter housing 4, from which said hydraulic fluid passes in through this second hydraulic fluid aperture 13 to the space 15 inside of the torque converter housing 4 to the left in the drawing of the lock up clutch plate 3, between the lock up clutch plate 3 and the end wall 4a of the torque converter housing 4, fills the inside of the torque converter housing 4 as is of course required, flows past the outer edge of the lock up clutch plate 3, between the lining 91 mounted on this outer edge and the end wall 4a of the torque converter housing 4, to the space 14 inside the torque converter housing 4 to the right in the drawing of the lock up clutch plate 3, and is taken out from the first hydraulic fluid aperture 12 from this space 14 inside of the torque converter housing 4 to the right in the drawing of the lock up clutch plate 3, passes through the conduit 48 to the port 49 of the lock up clutch control valve 38, whence it is communicated to the port 55 thereof, whence it is drained to the hydraulic fluid reservoir 28 via the hydraulic fluid conduit 89 and the ports 88 and 90 of the fail safe valve 39; or (b) the hydraulic fluid pressure control system 27 supplies the torque converter hydraulic fluid pressure Pq to the port 55 of the lock up clutch control valve 38, whence this pressure is transmitted to the port 49 thereof, whence it is transmitted via the hydraulic fluid conduit 48 to the first hydraulic fluid aperture 12 of the torque converter housing 4, from which said hydraulic fluid passes in through this first hydraulic fluid aperture 12 to the space 14 inside of the torque converter housing 4 to the right in the drawing of the lock up clutch plate 3, fills the inside of the torque converter housing 4 as is of course required, flows past the outer edge of the lock up clutch plate 3, between the lining 91 mounted on this outer edge and the end wall 4a of the torque converter housing 4, to the space 15 inside the torque converter housing 4 to the left in the drawing of the lock up clutch plate 3, between the lock up clutch plate 3 and the end wall 4a of the torque converter housing 4, and is taken out from the second hydraulic fluid aperture 13 from this space 15 inside of the torque converter housing 4 to the left in the drawing of the lock up clutch plate 3, passes through the conduit 47 to the port 46 of the lock up clutch control valve 38, whence it is communicated to the port 56 thereof, whence it is drained to the hydraulic fluid reservoir 28 via the hydraulic fluid conduit 57 and the ports 58 and 59 of the fail safe valve 39.

In case (a), as before, the flow of hydraulic fluid causes an excess of hydraulic fluid pressure on the left side in the figure of the clutch plate 3 over the hydraulic fluid pressure on the right side thereof, due to the rather restricted size of the space available for passage of hydraulic fluid past the lining 91, between said lining 91 and the end wall 4a of the torque converter housing 5, and this pressure difference ensures that the clutch plate 3 as a whole is biased to the right in the figure, and is pressed away from the end wall 4a of the torque converter housing 4, and does not rotationally engage said end wall 4a via the lining 91, thus causing the clutch plate 3 and the torque converter housing 4 not to be mechanically rotationally coupled together. Accordingly, the pump impeller 6 and the turbine member 7 of the torque converter 1 are not mechanically coupled together with regard to their rotation, but are only rotationally coupled together via the circulation of hydraulic fluid within the torque converter 1, i.e. are only rotationally coupled together in a torque converting fashion, according to the normal per se well known functioning of the torque converter 1. In other words, the lock up clutch assembly is disengaged, by the supply of hydraulic fluid into the interior of the torque converter housing 4 in through the second hydraulic fluid aperture 13, and the taking of hydraulic fluid out of the interior of the torque converter housing 4 from the first hydraulic fluid aperture 12.

On the other hand, in case (b) above, the flow of hydraulic fluid causes an excess of fluid pressure on the right side in the figure of the clutch plate 3 over the fluid pressure on the left side thereof, due to the rather restricted size of the space available for passage of hydraulic fluid past the lining 91, between said lining 91 and the end wall 4a of the torque converter housing 4, and this pressure difference ensures that the clutch plate 3 as a whole is biased to the left in the figure, and is pressed tightly against the end wall 4a of the torque converter housing 4, via the lining 91, thus causing the clutch plate 3 and the torque converter housing 4 to be mechanically rotationally coupled together. Accordingly the power input shaft 5 and the power output shaft 9 of the torque converter 1 are now mecahnically coupled together with regard to their rotation, and the lock up clutch assembly is engaged, by the supply of hydraulic fluid into the interior of the torque converter housing 4 in through the first hydraulic fluid aperture 12, and the taking of hydraulic fluid out of the interior of the torque converter housing 4 from the second hydraulic fluid aperture 13.

In either of the above cases (a) and (b), in this state of controlling of the lock up clutch assembly by the fail safe valve 39, the port 50 of the lock up clutch control valve 38 is closed by the land portion 40b of the valve spool member 40, and is not connected to any other port, and hence only a small flow of hydraulic fluid is passed through the hydraulic fluid cooler incorporated in the hydraulic fluid pressure control system 27, said small flow passing through the restricted orifice 98 from the hydraulic fluid conduit 48. However, at this time, since as will be explained later in fact the case (a) does not occur during usual running of the vehicle in the overdrive speed stage, except in the event of sticking of the lock up clutch control valve 38 or of the first lock up clutch interrupt valve 60—in other words, the case (a) is chiefly an emergency condition—therefore generally at this time the lock up clutch assembly is engaged, and therefore the circulation of hydraulic fluid within the torque converter 1 has ceased, and the body of fluid within the housing 4 of the torque converter 1 is rotating as a unit together with the housing 4, the pump impeller 6, the turbine member 7, and the stator 8, all these being in rotation at substantially the same rotational speed, and accordingly very little heat is being generated within the torque converter 1 by the churning of hydraulic fluid therein, because little frictional loss is occurring in the torque converter 1. Therefore, only a slight cooling effect is generally necessary to be provided by the hydraulic fluid cooler at this time. However, in order to provide some cooling in the case (a) for the hydraulic fluid within the transmission, the orifice 98 is provided, as explained above.

Construction of the first lock up clutch interrupt valve

Now, the construction of the first lock up clutch interrupt valve 60 will be explained. This first lock up clutch interrupt valve 60 comprises a valve housing in which there is formed a bore, and a valve spool member 61 which is slidingly fitted into said bore, so as to reciprocate in the upwards and downwards directions as seen in the drawing. A compression coil spring 62 is provided below said valve spool member 61 in said bore, so as to bias said valve spool member 61 upwards as seen in the drawing, and so as to bear on the lower end of said bore of said first lock up clutch interrupt valve 60. At the upper end of said bore as seen in the drawing, above said valve spool member 61, there is thus defined within said valve bore a pressure chamber to which a control port 64 communicates, the pressure within this pressure chamber acting on the valve spool member 61 so as to bias said valve spool member 61 downwards as seen in the drawing within said valve bore, against the compression action of the compression coil spring 62. The valve spool member 61 can move either to a downwardly biased position within said valve bore of said first lock up clutch interrupt valve 60, as seen to the right of the central axis of the bore of the first lock up clutch interrupt valve 60 in the drawing, or to an upwardly biased position within said valve bore, as seen to the left of the central axis of the valve bore in the drawing.

Operation of the first lock up clutch interrupt valve

The governor hydraulic fluid pressure Pgo produced by the governor hydraulic fluid pressure control valve 33 is always supplied, via a hydraulic fluid conduit 63, from the hydraulic fluid pressure control system 27 to the control port 64 of the first lock up clutch interrupt valve 60, and thus to said pressure chamber defined at the upper end of the valve bore thereof. Thus, the force due to this governor hydraulic fluid pressure Pgo acts upon the valve spool member 61 of the first lock up clutch interrupt valve 60 so as to bias said valve spool member 61 downwards in the drawing, against the biasing action of the compression coil spring 62 which opposes said force due to said governor hydraulic fluid pressure Pgo, and thus said valve spool member 61 is moved upwards or downwards in the drawing, according to a balance relationship between the force due to said governor hydraulic fluid pressure Pgo and the compression action of said compression coil spring 62; in more detail, when the force due to said governor hydraulic fluid pressure Pgo prevails over the force due to said compression coil spring 62, which will occur when the road speed of the vehicle incorporating this transmission system is higher than a certain first predetermined road speed, then said valve spool member 61 is shifted to its downward shifted position as seen to the right of the central axis of the valve bore of the first lock up clutch interrupt valve 60 in the drawing; and, when the force due to the compression of said compression coil spring 62 prevails over the force due to said governor hydraulic fluid pressure Pgo, which will occur when the road speed of the vehicle incorporating this transmission system is lower than said certain first predetermined road speed, then said valve spool member 61 is shifted to its upward shifted position as seen to the left of the central axis of the valve bore of the first lock up clutch interrupt valve 60 in the drawing.

Connections of the first lock up clutch interrupt valve

The first lock up clutch interrupt valve 60 is provided with three switched ports 99, 65, and 67. The port 99 is a drain port; the port 67 is connected to the hydraulic fluid conduit 68 which, as explained above, leads to the lower control port 54 of the lock up clutch control valve 38; and the port 65 is connected, via a hydraulic fluid conduit 66, to the hydraulic fluid pressure control system 27, and is supplied with the hydraulic fluid pressure Pb, which is produced as explained above by the hydraulic fluid pressure control system 27 for engaging the multi plate brake 21 of the overdrive mechanism 16 when and only when the gear transmission mechanism 2 as a whole is to be controlled to be in its highest speed stage or the overdrive speed stage, and which when so produced is of a pressure magnitude substantially equal to the line hydraulic fluid pressure Pl. When the valve spool member 61 of the first lock up clutch interrupt valve 60 is in its upwardly biased position within the valve bore thereof as seen to the left of the valve bore of said lock up clutch interrupt valve 60 in the drawing, then the port 65 is not communicated to any other port, while the port 67 is communicated to the drain port 99. On the other hand, when the valve spool member 61 of the lock up clutch interrupt valve 60 is in its downwardly biased position within the valve bore thereof as seen to the right of said valve bore in the drawing, then the drain port 99 is not communicated to any other port, while the port 67 is communicated to the port 65.

Function of the first lock up clutch interrupt valve

The first lock up clutch interrupt valve described above operates as follows.

When the road speed of the vehicle incorporating this transmission system is higher than said certain first predetermined road speed, then said valve spool member 61 is shifted to its downward shifted position as seen to the right of the central axis of the valve bore of the first lock up clutch interrupt valve 60 in the drawing by the force due to the governor hydraulic fluid pressure Pgo which prevails over the compression force of the compression coil spring 62; and, if and only if at this time the hydraulic fluid pressure Pb is being produced as explained above by the hydraulic fluid pressure control system 27 for engaging the multi plate brake 21 of the overdrive mechanism 16, i.e. if and only if the gear transmission mechanism 2 as a whole is being controlled to be in its highest speed stage or its overdrive speed stage, then said hydraulic fluid pressure Pb, of magnitude substantially equal to the line hydraulic fluid pressure Pl, is present at the port 67 of the first lock up clutch interrupt valve 60 and is supplied via the hydraulic fluid conduit 68 to the lower control port 54 of the lock up clutch control valve 38; in all other cases—i.e. when the gear transmission mechanism 2 as a whole is being controlled to be in any speed stage other than its highest speed stage or its overdrive speed stage, or when even though the gear transmission mechanism 2 as a whole is being controlled to be in its highest speed stage or its overdrive speed stage nevertheless the road speed of the vehicle incorporating this transmission system is lower than said certain first predetermined road speed, in which case the force due to the compression of said compression coil spring 62 will prevail over the force due to said governor hydraulic fluid pressure Pgo and will shift said valve spool member 61 to its upward shifted position as seen to the left of the central axis of the valve bore of the first lock up clutch interrupt valve 60 in the drawing—no substantial hydraulic fluid pressure is present at the port 67 of the first lock up clutch interrupt valve 60 or is supplied via the hydraulic fluid conduit 68 to the lower control port 54 of the lock up clutch control valve 38. In other words, the presence of hydraulic fluid pressure at the lower control port 54 of the lock up clutch control valve 38 indicates high vehicle speed operation in the overdrive speed stage.

Construction of the second lock up clutch interrupt valve

Now, the construction of the second lock up clutch interrupt valve 70 will be explained. This second lock up clutch interrupt valve 70 comprises a valve housing in which there is formed a bore, and a valve spool member 72 which is slidingly fitted into said bore, so as to reciprocate in the upwards and downwards directions as seen in the drawing. A compression coil spring 73 is provided above said valve spool member 72 in said bore, so as to bias said valve spool member 72 downwards as seen in the drawing, and so as to bear on the upper end of said bore of said second lock up clutch interrupt valve 70. At the upper end of said bore as seen in the drawing, above said valve spool member 72, there is defined within said valve bore a pressure chamber to which a control port 77 communicates, the pressure within this pressure chamber acting on the valve spool member 72 so as to bias said valve spool member 72 downwards as seen in the drawing within said valve bore, so as to aid the compression action of the compression coil spring 73; and at the lower end of said bore as seen in the drawing, below said valve spool member 72, there is defined within said valve bore another pressure chamber to which a control port 75 communicates, the pressure within this other pressure chamber acting on the valve spool member 72 so as to bias said valve spool member 72 upwards as seen in the drawing within said valve bore, against the compression action of the compression coil spring 73, and against the force of any pressure present in said chamber at the top of said valve bore to which said control port 77 communicates. The valve spool member 72 can move either to a downwardly biased position within said valve bore of said second lock up clutch interrupt valve 70, as seen to the left of the central axis of the bore of the second lock up clutch interrupt valve 70 in the drawing, or to an upwardly biased position within said valve bore, as seen to the right of the central axis of the valve bore in the drawing.

Operation of the second lock up clutch interrupt valve

The throttle hydraulic fluid pressure Pth produced by the throttle hydraulic fluid pressure control valve 32 is always supplied, via a hydraulic fluid conduit 76, from the hydraulic fluid pressure control system 27 to the control port 77 of the second lock up clutch interrupt valve 70, and thus to said pressure chamber defined at the upper end in the drawing of the valve bore thereof. Thus, the force due to this throttle hydraulic fluid pressure Pth, of a magnitude proportional to the magnitude of said throttle hydraulic fluid pressure Pth, acts upon the valve spool member 61 of the second lock up clutch interrupt valve 70 so as to bias said valve spool member 61 downwards in the drawing, thus aiding the biasing action of the compression coil spring 73. On the other hand, the hydraulic fluid pressure Pd—which is produced, as explained above, for activating the hydraulic fluid pressure activated friction engagement mechanism 26, when and only when the low/direct gear transmission mechanism 25 is providing its directly connected speed stage, i.e. when and only when either the gear transmission mechanism 2 is providing its highest speed stage or its overdrive speed stage, or when the gear transmission mechanism 2 is providing its next to highest speed stage or its directly connected speed stage—is supplied to said pressure chamber defined at the lower end of said bore of said second lock up clutch interrupt valve 70 as seen in the drawing, below said valve spool member 72 thereof, to which said control port 75 communicates; and therefore said hydraulic fluid pressure Pd, when pressure and of magnitude substantially equal to said line hydraulic fluid pressure Pl, opposes (in terms of action on said valve spool member 72 of said second lock up clutch interrupt valve 70) said force which is the combination of the spring force of the compression coil spring 73 and the pressure force due to said throttle hydraulic fluid pressure Pth. Thus, in these circumstances, said valve spool member 72 is moved upwards or downwards in the drawing, according to a balance relationship between said force which is the combination of the spring force of the compression coil spring 73 and the variable pressure force due to said throttle hydraulic fluid pressure Pth which of course varies according to variation of the throttle opening of the throttle of the vehicle, and said force due to said hydraulic fluid pressure Pd, which when present is a constant force.

In more detail, when said force which is the combination of the spring force of the compression coil spring 73 and the variable pressure force due to said throttle hydraulic fluid pressure Pth prevails over said constant force due to said hydraulic fluid pressure Pd, which will occur when the throttle opening of said throttle of the vehicle incorporating this transmission system is greater than a certain predetermined throttle opening, then said valve spool member 72 is shifted to its downward shifted position as seen to the left of the central axis of the valve bore of the second lock up clutch interrupt valve 70 in the drawing; but, on the other hand, when said constant force due to said hydraulic fluid pressure Pd prevails over said force which is the combination of the spring force of the compression coil spring 73 and the variable pressure force due to said throttle hydraulic fluid pressure Pth, which will occur when the throttle opening of said throttle of the vehicle incorporating this transmission system is less than said certain predetermined throttle opening, then said valve spool member 72 is shifted to its upward shifted position as seen to the right of the central axis of the valve bore of the second lock up clutch interrupt valve 70 in the drawing.

Connections of the second lock up clutch interrupt valve

The second lock up clutch interrupt valve 70 is provided with three switched ports 97, 71, and 78. The port 97 is a drain port; the port 78 is connected to a hydraulic fluid conduit 79 which leads to a port 80 of the fail safe valve 39; and the port 71 is connected, via a hydraulic fluid conduit 69, to the hydraulic fluid pressure control system 27, and is supplied with the hydraulic fluid pressure Pc, which is produced as explained above by the hydraulic fluid pressure control system 27 for engaging the multi plate clutch 23 of the overdrive mechanism 16 when and only when the gear transmission mechanism 2 as a whole is to be controlled not to be in its highest speed stage or the overdrive speed stage, and which when so produced is of a pressure magnitude substantially equal to the line hydraulic fluid pressure Pl. When the valve spool member 72 of the second lock up clutch interrupt valve 70 is in its downwardly biased position within the valve bore thereof as seen to the left of the valve bore of said lock up clutch interrupt valve 70 in the drawing, then the port 71 is not communicated to any other port, while the port 78 is communicated to the drain port 97. On the other hand, when the valve spool member 72 of the lock up clutch interrupt valve 70 is in its upwardly biased position within the valve bore thereof as seen to the right of said valve bore in the drawing, then the drain port 97 is not communicated to any other port, while the port 78 is communicated to the port 71.

Function of the second lock up clutch interrupt valve

The second lock up clutch interrupt valve described above operates as follows.

When the hydraulic fluid pressure Pd is being produced, as explained above, i.e. when and only when the low/direct gear transmission mechanism 25 is providing its directly connected speed stage (which is when and only when the gear transmission mechanism 2 is providing either its highest speed stage or its directly connected speed stage), and when the throttle opening of the throttle of the vehicle incorporating this transmission system is lower than said certain predetermined throttle opening, then and only then is said valve spool member 72 shifted to its upward shifted position as seen to the right of the central axis of the valve bore of the second lock up clutch interrupt valve 70 in the drawing by said force of constant magnitude due to said hydraulic fluid pressure Pd prevailing over said force which is the combination of the spring force of the compression coil spring 73 and the variable pressure force due to said throttle hydraulic fluid pressure Pth; in all other cases, said valve spool member 72 is shifted to its downward shifted position as seen to the left of the central axis of the valve bore of the second lock up clutch interrupt valve 70 in the drawing. When said valve spool member 72 is thus shifted to its upward shifted position as seen to the right of the central axis of the valve bore, if and only if at this time the hydraulic fluid pressure Pc is being produced as explained above by the hydraulic fluid pressure control system 27 for engaging the multi plate clutch 23 of the overdrive mechanism 16, i.e. if and only if the gear transmission mechanism 2 as a whole is being controlled not to be in its highest speed stage or the overdrive speed stage, then said hydraulic fluid pressure Pc, of magnitude substantially equal to the line hydraulic fluid pressure Pl, is present at the port 78 of the second lock up clutch interrupt valve 70 and is supplied via the hydraulic fluid conduit 79 to the port 80 of the fail safe valve 39; in all other cases—i.e. when the gear transmission mechanism 2 as a whole is being controlled to be in any speed stage other than its next to highest speed stage or its directly connected speed stage, or when even though the gear transmission mechanism 2 as a whole is being controlled to be in its next to highest speed stage or its directly connected speed stage nevertheless the throttle opening of the throttle of the vehicle incorporating the transmission system is greater than said certain predetermined throttle opening, in which case the force due to the combination of the spring force of the compression coil spring 73 and the variable pressure force due to said throttle hydraulic fluid pressure Pth will prevail over the constant force due to said hydraulic fluid pressure Pd and will shift said valve spool member 61 to its downward shifted position as seen to the left of the central axis of the valve bore of the second lock up clutch interrupt valve 70 in the drawing—no substantial hydraulic fluid pressure is present at the port 78 of the second lock up clutch interrupt valve 70 or is supplied via the hydraulic fluid conduit 79 to the port 80 of the fail safe valve 39. In other words, in the shown preferred embodiment, the presence of hydraulic fluid pressure at the port 80 of the fail safe valve 39 indicates fairly low vehicle throttle opening in the third speed stage.

Construction of the fail safe valve

Now the fail safe valve 39 will be described. This fail safe valve 39 comprises a valve housing in which there is formed a bore, and a valve spool member 82 which is slidingly fitted into said bore, so as to reciprocate in the upwards and downwards directions as seen in the drawing. Below said valve spool member 82 in said bore, a compression coil spring 81 is provided in said bore of said fail safe valve 39, so as to bias said valve spool member 82 in the upwards direction as seen in the drawing. The bottom end of said compression coil spring 81 bears on the bottom end of said bore. At the upper end of said bore of said fail safe valve 39 as seen in the drawing, above said valve spool member 82, there is thus defined within said valve bore a pressure chamber, to which a control port 83 communicates, the pressure within this pressure chamber acting on the valve spool member 82 so as to bias it downwards as seen in the drawing, against the compression action of said compression coil spring 81. The valve spool member 82 can move either to a downwardly biased position within the valve bore of the lock up clutch control valve 38, as seen to the right of the central axis of said bore in the drawing, or to an upwardly biased position within said valve bore, as seen to the left of the central axis of said valve bore in the drawing.

Operation of the fail safe valve

The governor hydraulic fluid pressure Pgo produced by the governor hydraulic fluid pressure control valve 33 is always supplied, via a hydraulic fluid conduit 95 and the aforementioned hydraulic fluid conduit 63 and via the control port 64 of the first lock up clutch interrupt valve 60, from the hydraulic fluid pressure control system 27 to the control port 83 of the fail safe valve 39, and thus to said pressure chamber defined at the upper end of the valve bore thereof. Thus, the force due to this governor hydraulic fluid pressure Pgo acts upon the valve spool member 82 of the fail safe valve 39 so as to bias said valve spool member 82 downwards in the drawing, against the biasing action of the compression coil spring 81 which opposes said force due to the governor hydraulic fluid pressure Pgo, and thus said valve spool member 82 is moved upwards or downwards in the drawing, according to a balance relationship between the force due to said governor hydraulic fluid pressure Pgo and the compression action of said compression coil spring 81; in more detail, when the force due to said governor hydraulic fluid pressure Pgo prevails over the force due to said compression coil spring 81, which will occur when the road speed of the vehicle incorporating this transmission system is higher than a certain second predetermined road speed, then said valve spool member 82 is shifted to its downward shifted position as seen to the right of the central axis of the valve bore of the fail safe valve 39 in the drawing; and, when the force due to the compression of said compression coil spring 81 prevails over the force due to said governor hydraulic fluid pressure Pgo, which will occur when the road speed of the vehicle incorporating this transmission system is lower than said certain second predetermined road speed, then said valve spool member 82 is shifted to its upward shifted position as seen to the left of the central axis of the valve bore of the fail safe valve 39 in the drawing.

The fail safe valve 39 is provided with nine switched ports 59, 90, 80, 100, 86, 58, 88, 87, and 84. Of these ports, the ports 59, 90, and 100 are drain ports. When the valve spool member 82 is in its downwardly biased position within the valve bore as seen on the right of the central axis of the valve bore in the drawing, then the ports 86, 90, and 100 are not connected to any other ports, while the ports 58 and 59 are communicated to one another, the ports 87 and 88 are communicated to one another, and the ports 84 and 80 are also communicated to one another. On the other hand, when the valve spool member 82 is in its upwardly biased position within the valve bore of the fail safe valve 39 as seen on the left of the central axis of the valve bore in the drawing, then the port 59, the port 87, and the port 80 are not connected to any other ports, while the ports 86 and 58 are communicated to one another, the ports 88 and 90 are communicated to one another, and the ports 84 and 81 are also communicated to one another.

Connections of the fail safe valve

These switching ports of the fail safe valve 39 are connected as follows. The control port 83 is connected, via the hydraulic fluid conduit 95, the first lock up clutch interrupt valve 60, and the hydraulic fluid conduit 63, to the hydraulic fluid pressure control system 27, for receiving supply of the governor hydraulic fluid pressure Pgo, as previously explained. As explained above, the ports 59, 90, and 100 are drain ports. The port 80 is connected via a hydraulic fluid conduit 79 to the port 78 of the second lock up clutch interrupt valve 70. The ports 86 and 87 are connected, via the hydraulic fluid conduit 43, to the hydraulic fluid pressure control system 27, for always receiving supply of the torque converter hydraulic fluid pressure Pq. The port 58 is connected via a hydraulic fluid conduit 57 to the port 56 of the lock up clutch control valve 38. The port 88 is connected, via a hydraulic fluid conduit 89, to the port 55 of the lock up clutch control valve 38. And the port 84 is connected, via a hydraulic fluid conduit 85, to the port 88 of the lock up clutch control valve 38.

Function of the fail safe valve

Thus, when the vehicle road speed is below said certain second predetermined value, then the valve spool member 82 of the fail safe valve 39 is in its upwardly biased position within the valve bore of the fail safe valve 39 as seen on the left of the central axis of the valve bore in the drawing, and at this time even if any hydraulic fluid pressure is present at the port 80 of the fail safe valve 39 this hydraulic fluid pressure is not communicated to the port 84 thereof, which is instead connected to the drain port 81; while, on the other hand, when the vehicle road speed is above said certain second predetermined value, then the valve spool member 82 of the fail safe valve 39 is in its downwardly biased position within the valve bore of the fail save valve 39 as seen on the right of the central axis of the valve bore in the drawing, and at this time any hydraulic fluid pressure present at the port 80 of the fail safe valve 39 is communicated to the port 84 thereof, which is connected via the hydraulic fluid conduit 85 to the intermediate control port 53 of the lock up clutch control valve 38. Thus in summary (including the condition arrived at previously, relating to the presence of hydraulic fluid pressure at the port 80 of the fail safe valve, with relation to the functioning of the second lock up clutch interrupt valve 70), the presence of hydraulic fluid pressure at the intermediate control port 53 of the lock up clutch control valve 38 indicates vehicle operation at a road speed greater than said second predetermined road speed value at fairly low vehicle throttle opening in the third speed stage, in the shown preferred embodiment.

Further, as explained above to some extent with relation to the functioning of the lock up clutch control valve 38, according as the valve spool member 82 of this fail safe valve 39 moves between its upper and its lower positions within the bore thereof, i.e. according as the vehicle road speed is below or is above said second predetermined vehicle road speed value, assuming that the valve spool member 40 of the lock up clutch control valve 38 is in its upwardly biased position within the valve bore thereof, as seen to the right of the central axis of this valve bore in the drawing, respectively either: (a) the hydraulic fluid pressure control system 27 supplies the torque converter hydraulic fluid pressure Pq to the port 56 of the lock up clutch control valve 38, via the hydraulic fluid conduit 43, the ports 86 and 58 of the fail safe valve 39 which are now communicated, and the hydraulic fluid conduit 57, whence this pressure is transmitted to the port 46 thereof, whence it is transmitted as in the previous case, via the hydraulic fluid conduit 47, to the second hydraulic fluid aperture 13 of the torque converter housing 4, from which said hydraulic fluid passes in through this second hydraulic fluid aperture 13 to the space 15 inside of the torque converter housing 4 to the left in the drawing of the lock up clutch plate 3, between the lock up clutch plate 3 and the end wall 4a of the torque converter housing 4, fills the inside of the torque converter housing 4 as is of course required, flows past the outer edge of the lock up clutch plate 3, between the lining 91 mounted on this outer edge and the end wall 4a of the torque converter housing 4, to the space 14 inside the torque converter housing 4 to the right in the drawing of the lock up clutch plate 3, and is taken out from the first hydraulic fluid aperture 12 from this space 14 inside of the torque converter housing 4 to the right in the drawing of the lock up clutch plate 3, and passes through the conduit 48 to the port 49 of the lock up clutch control valve 38, whence it is communicated to the port 55 thereof, whence it is drained to the hydraulic fluid reservoir 28 via the hydraulic fluid conduit 89 and the ports 88 and 90 of the fail safe valve 39 which are now communicated; or (b) the hydraulic fluid pressure control system 27 supplies the torque converter hydraulic fluid pressure Pq to the port 55 of the lock up clutch control valve 38, via the ports 87 and 88 of the fail safe valve 39 which are now communicated and the hydraulic fluid conduit 89, whence this pressure is transmitted to the port 49 thereof, whence it is transmitted via the hydraulic fluid conduit 48 to the first hydraulic fluid aperture 12 of the torque converter housing 4, from which said hydraulic fluid passes in through this first hydraulic fluid aperture 12 to the space 14 inside of the torque converter housing 4 to the right in the drawing of the lock up clutch plate 3, fills the inside of the torque converter housing 4 as is of course required, flows past the outer edge of the lock up clutch plate 3, between the lining 91 mounted on this outer edge and the end wall 4a of the torque converter housing 4, to the space 15 inside the torque converter housing 4 to the left in the drawing of the lock up clutch plate 3, between the lock up clutch plate 3 and the end wall 4a of the torque converter housing 4, and is taken out from the second hydraulic fluid aperture 13 from this space 15 inside of the torque converter housing 4 to the left in the drawing of the lock up clutch plate 3, and passes through the conduit 47 to the port 46 of the lock up clutch control valve 38, whence it is communicated to the port 56 thereof, whence it is drained to the hydraulic fluid reservoir 28 via the hydraulic fluid conduit 57 and the ports 58 and 59 of the fail safe valve 39 which are now communicated.

In case (a), as explained above, the flow of hydraulic fluid causes an excess of hydraulic fluid pressure on the left side in the figure of the clutch plate 3 over the hydraulic fluid pressure on the right side thereof, and this pressure difference ensures that the clutch plate 3 as a whole is biased to the right in the figure, and is pressed away from the end wall 4a of the torque converter housing 4, and does not rotationally engage said end wall 4a via the lining 91, thus causing the clutch plate 3 and the torque converter housing 4 not to be mechanically rotationally coupled together. Accordingly, the lock up clutch assembly of the torque converter 1 is disengaged.

On the other hand, in case (b), as also explained above, the flow of hydraulic fluid causes an excess of fluid pressure on the right side in the figure of the clutch plate 3 over the fluid pressure on the left side thereof, and this pressure difference ensures that the clutch plate 3 as a whole is biased to the left in the figure, and is pressed tightly against the end wall 4a of the torque converter housing 4, via the lining 91, thus causing the clutch plate 3 and the torque converter housing 4 to be mechanically rotationally coupled together. Accordingly, the lock up clutch assembly of the torque converter 1 is engaged.

Normal function of the entire system

Now, the functioning of the entire system will be explained, in the case of normal operation when none of the valve is sticking, and in particular when the lock up clutch control valve 38 is not sticking. Since the finer details of the structure and functions of each of the valves have already been explained individually, only the overall cooperation of the various parts of the composite system will be explained.

First, it should be appreciated that the second predetermined road speed value, mentioned above with respect to the to and fro movement of the fail safe valve 39, should be substantially lower than the first predetermined road speed value, mentioned above with respect to the to and fro movement of the first lock up clutch interrupt valve 60. In fact, the second predetermined road speed value, which relates to the fail safe valve 39, should be approximately the lowest road speed at which the vehicle can satisfactorily function with the lock up clutch assembly engaged in the overdrive speed stage, without the low revolution speed of the engine of the vehicle causing irregular operation thereof such as stalling, snatching, misfiring, or poor acceleration. This is because the function of the fail safe valve 39 is only as a backup or fail safe system, in order to prevent stalling of the vehicle due to improper low speed engagement of the lock up clutch assembly.

Next, it should be remarked that the lock up clutch assembly is engaged when and only when the valve spool member 40 of the lock up clutch control valve 38 is in its upward position within the valve bore thereof, as seen in the drawing, and also the valve spool member 82 of the fail safe valve 39 is in its downward position within the valve bore thereof, as seen in the drawing. This will occur when and only when the vehicle road speed is higher than said second predetermined road speed value, and also hydraulic fluid pressure is present at either the lower control port 54 or the intermediate control port 53 of the lock up clutch control valve 38; i.e., as explained above, when and only when the vehicle road speed is higher than said second predetermined road speed value and either (a) the gear transmission mechanism 2 is selected to be in its overdrive speed stage and the vehicle road speed is higher than said first predetermined road speed value, or (b) the gear transmission mechanism 2 is selected to be in its directly connected speed stage (i.e. its speed stage which is one speed stage below the overdrive speed stage) and the throttle opening of the throttle of the vehicle is less than said certain predetermined throttle opening.

Of course, in case (a), the condition with respect to the vehicle road speed being greater than said second predetermined road speed value is irrelevant; and so the final condition for engagement of the lock up clutch assembly, in normal operation of the system, is: either overdrive speed stage should be selected with the road speed of the vehicle higher than said first predetermined road speed value, or directly engaged speed stage should be engaged with throttle opening less than said certain predetermined throttle opening and with vehicle road speed higher than said second predetermined road speed value.

The consequences of the above described implementation of this condition for vehicle operation are very beneficial with regard to fuel economy of the vehicle, and at the same time vehicle performance and drivability are not significantly deteriorated by the engagement of the lock up clutch assembly, which occurs in the directly connected speed stage as well as the overdrive speed stage. This is because, when the throttle opening of the vehicle is made by the driver to be greater than said predetermined value of throttle opening, i.e. when it is desired by the driver to accelerate the vehicle sharply, then the lock up clutch assembly is automatically disengaged, so as to allow the torque converter 1 to provide its torque multiplication function.

For example, consider the case in which the vehicle is operating in overdrive speed stage with the lock up clutch engaged, i.e. at a road speed higher than said first predetermined vehicle road speed, and suppose that vehicle road speed gradually drops, with the throttle of the vehicle of course at this time opened by a relatively small amount. In this case, when the vehicle road speed drops to below said first predetermined vehicle road speed, while the transmission is still selected to the overdrive speed stage, the lock up clutch assembly will be disengaged. If now, however, the transmission shifts down to the directly connected speed stage, then once again the lock up clutch assembly will be engaged, provided that vehicle road speed remains higher than said second predetermined road speed value, and provided that the vehicle throttle opening remains relatively small. On the other hand, when it is desired to accelerate the vehicle, then the vehicle throttle opening will be increased by the driver, and in this case the lock up clutch assembly is once again disengaged, as soon as throttle opening becomes higher than said predetermined value thereof, so as to obtain the torque multiplication function of the torque converter assembly.

It should be noted that the present invention could also be adapted to the selective engagement of the lock up clutch assembly in other non overdrive speed stages of the gear transmission mechanism 2 than the directly connected speed stage. For instance, in another possible different embodiment, if the hydraulic fluid pressure which is supplied to the port 75 of the second lock up clutch interrupt valve 70 is not the hydraulic fluid pressure Pd, which as explained above is present when and only when the low/direct gear transmission mechanism 25 is providing its directly connected speed stage, but is a hydraulic fluid pressure which is present when and only when the low/direct gear transmission mechanism 25 is providing its directly connected speed stage or its speed stage next below its said directly connected speed stage, then the function of the lock up clutch is available in said speed stage next below said directly connected speed stage, as well as in said overdrive speed stage and in said directly connected speed stage; and, in that said speed stage next below said directly connected speed stage, said lock up clutch assembly is again engaged when and only when the vehicle road speed is higher than said second predetermined road speed value and the throttle opening of the throttle of the vehicle is less than said certain predetermined throttle opening. No modification would need to be made to any of the other details of the shown construction.

Fail safe function of the entire system

Now, the functioning of the entire system will be explained, in the case of abnormal operation thereof wherein the lock up clutch control valve 38 is sticking. Again, only the overall cooperation of the various parts of the composite system will be explained.

First, it should be appreciated that the to and fro operation of the fail safe valve 39, as described above, is important for disengaging of the lock up clutch assembly, when the direct speed stage of the gear transmission mechanism 2 is engaged, and vehicle road speed drops below said second predetermined road speed value. In this sense, the valve 39 is not operating at this time as a fail safe valve. However, when the overdrive speed stage of the gear transmission mechanism 2 is engaged, said valve 39 has a very important fail safe function.

That is, suppose that the valve spool member 40 of the lock up clutch control valve 38 sticks in its upward position within the valve bore thereof, as seen on the right side of the central axis of the valve bore in the drawing. In this case, the operation of the first lock up clutch interrupt valve 60 for disengaging the lock up clutch when vehicle road speed drops below said first predetermined road speed value as vehicle road speed drops becomes ineffective, because even though the supply of hydraulic fluid pressure to the lower control port 54 of the lock up clutch control valve 38 by said first lock up clutch interrupt valve 60 is stopped, the valve spool element 40 thereof remains in the upwards position, because it it stuck. However, if vehicle road speed further drops so as to become below said second predetermined road speed value, then the valve spool member 82 of the fail safe valve will move from its downwardly biased position within the valve bore thereof to its upwardly biased position therein, thus, as explained above, reversing the senses of supply of hydraulic fluid pressure to, and of draining of hydraulic fluid from, the lock up clutch assembly, and thus disengaging the lock up clutch. This fail safe operation is very important for preventing stalling of the engine of the vehicle, in the event of sticking of the lock up clutch control valve 38, which could otherwise make the vehicle completely inoperable.

**Claims**

1. An automatic transmission for an engine driven vehicle comprising:

(a) a gear transmission mechanism (2) comprising a plurality of hydraulic fluid pressure activated friction engaging mechanisms including a first friction engaging mechanism (21) which, when engaged, provides a highest speed stage, and a second friction engaging mechanism (23) which, when engaged, provides a next to highest speed stage, provided that the other friction engaging mechanisms are engaged or disengaged according to a particular predetermined pattern of combination of engagement and disengagement;

(b) a torque converter (1) with a lock up clutch (3), comprising a first and a second hydraulic fluid channel (12, 13) communicated with an interior of said torque converter, said lock up clutch being selectively engaged or disengaged according to whether hydraulic fluid pressure is supplied to said first hydraulic fluid channel (12) and is released from said second hydraulic fluid channel (13) or it is supplied to said second hydraulic fluid channel (13) and is released from said first hydraulic fluid channel (12);

and a transmission control system comprising:

(c) a source (29) of hydraulic fluid pressure;

(d) a line hydraulic fluid pressure control valve (30) which produces a line hydraulic fluid pressure (Pl) from said source;

(e) a governor hydraulic fluid pressure control valve (33) which produces a governor hydraulic fluid pressure (Pgo) from said line hydraulic fluid pressure, said governor hydraulic fluid pressure being representative of vehicle speed and increasing with increase of vehicle speed;

(f) a converter hydraulic fluid pressure control valve (37) which produces a converter hydraulic fluid pressure (Pq) from said source;

(g) a speed shift valve (36) which switches over a supply of said line hydraulic fluid pressure alternatively to provide a brake hydraulic fluid pressure (Pb) when said gear transmission is to provide said highest speed stage or to provide a clutch hydraulic fluid pressure (Pc) when said gear transmission is to provide said next to highest speed stage; wherein

(h) a lock up clutch control valve (38) comprising a housing formed with a bore, a valve spool member (40) and a piston member (41) coaxially fitted within said bore so as to abut against one another by their ends, and a spring (42) which biases said valve spool member towards said piston, a first chamber (=54) being defined at one end of said piston member remote from said valve spool member, to which said piston member exposes a first effective pressure receiving surface, a second chamber (=53) being defined around meeting ends of said valve spool member and said piston member, to which said valve spool member exposes a second effective pressure receiving surface; and a third chamber (=52) being defined at another end of said spool member remote from said piston member, to which said valve spool member exposes a third effective pressure receiving surface, said third effective pressure receiving surface being so small as compared with first and second effective pressure receiving surfaces that said valve spool member is shifted toward said third chamber when either said first or second chamber is supplied with said line hydraulic fluid pressure while said third chamber is supplied with said line hydraulic fluid pressure, said lock up clutch control valve being switched over so as to supply said converter hydraulic fluid pressure (Pq) to said first hydraulic fluid channel (12) while releasing said second hydraulic fluid channel (13) when said valve spool member (49) is shifted toward said third chamber, and to supply said converter hydraulic fluid pressure (Pq) to said second hydraulic fluid channel (13) while releasing said first hydraulic fluid channel (12) when said valve spool member (40) is shifted toward said second chamber; and

(i) a lock up clutch control hydraulic fluid circuit having switch over valve means (39, 60) including at least a first switch over valve (39) which is actuated by said governor hydraulic fluid pressure (Pgo), said switch over valve means conducting said brake hydraulic fluid pressure (Pb) and said clutch hydraulic fluid pressure (Pc) separately to one (=54) and the other (=53) of said first and second chambers (=54, 53) of said lock up clutch control valve (38) when said governor hydraulic fluid pressure (Pgo) is higher than a predetermined value, while said line hydraulic fluid pressure (Pl) is supplied constantly to said third chamber (=52) of said lock up clutch control valve.

2. A transmission control valve according to claim 1, further comprising a throttle hydraulic fluid pressure control valve (32) which produces a throttle hydraulic fluid pressure (Pth) from said line hydraulic fluid pressure (Pl), said throttle hydraulic fluid pressure being representative of engine load and increasing with increase of engine load, wherein said lock up clutch control hydraulic fluid circuit further comprises a second switch over valve (70) which is actuated by said throttle hydraulic fluid pressure (Pth) and is connected in series with said first switch over valve (39) actuated by said governor hydraulic fluid pressure (Pgo) in conducting said clutch hydraulic fluid pressure (Pc), said second switch over valve (70) allowing conduction of said clutch hydraulic fluid pressure when said throttle hydraulic fluid pressure (Pth) is lower than a predetermined value.

3. A transmission control system according to claim 1 or 2, wherein a second control hydraulic fluid pressure (85, 53) derived from said clutch hydraulic fluid pressure (Pc) is provided to said lock up clutch control valve (38), when and only when the current value of said governor hydraulic fluid pressure (Pgo) is over a first predetermined pressure value and said throttle hydraulic fluid pressure (Pth) is lower than a second predetermined pressure value, wherein the first predetermined pressure value is responsible for the switching of said (fail-safe) switch over valve (39) controlling the supply of said second control hydraulic fluid pressure (85, 53) to the lock up clutch control valve (38).

4. A transmission control system according to one of the claims 1 to 3, further comprising a third switch over valve (60) which has a first switched position and a second switched position, which when in its said first switched position switches a supply of said brake hydraulic fluid pressure so as to supply said brake hydraulic fluid pressure to said lock up clutch control valve (38) as a first control hydraulic fluid pressure (conduit 54, 68), and which when in its said second switched position does not switch said supply of said brake hydraulic fluid pressure so that said lock up clutch control valve (38) in this case is not supplied with any such first control hydraulic fluid pressure; said third switch-over valve (60) being supplied with said governor hydraulic fluid pressure (Pgo) by a hydraulic fluid pressure control system (27), and being switched to its said second switched position when the pressure value of said governor hydraulic fluid pressure (Pgo) is less than a further predetermined pressure value, while being switched to its said first switched position when the pressure value of said governor hydraulic fluid pressure is greater than said further predetermined pressure value.

5. A transmission control system according to claim 4, wherein said third switch-over valve (60) comprises a valve element (61) which has a first position and a second position, and a means (62) for biasing said valve element towards its said second position; said first switched position of said third switch-over valve being the state thereof in which said valve element (61) is in its said first switched position, and said second switched position of said third switch-over valve being the state thereof in which said valve element (61) is in its said second switched position; said governor hydraulic fluid pressure (Pgo) acting on said valve element (61) so as to bias said valve element (61) towards its said first position; said third switch-over valve (60) being further formed with an input port (65) which is supplied with said brake hydraulic fluid pressure (Pb), when it is present, by said hydraulic fluid pressure control system (27), and an output port (67) which is communicated with said lock up clutch control valve (38) so that hydraulic fluid pressure present at said output port (67) is supplied to said lock up clutch control valve (38) as said first control hydraulic fluid pressure (conduit 54, 68); said input port (65) being communicated to said output port (67) when said valve element (61) is in its said first position; and said input port (65) being put out of communication with said output port (67) when said valve element (61) is in its said second position.

6. A transmission control system according to claim 5, wherein said third switch over valve (60) is further formed with a drain port (99) which is communicated to said output port (67) when said valve element (61) is in its said second position.

7. A transmission control system according to one of the claims 1 to 6, wherein said second switch over valve (70) has a first switched position and a second switched position, which valve when in its said first switched position switches supply of said clutch hydraulic fluid pressure (Pc) so as to supply said clutch hydraulic fluid pressure (Pc) towards said lock up clutch control valve (38) as a second control hydraulic fluid pressure (conduit 85, 53) and which valve when in its said second switched position does not switch said supply of said clutch hydraulic fluid pressure (Pc) towards said lock up clutch control valve (38) so that said lock up clutch control valve (38) in this case is not supplied with any such second control hydraulic fluid pressure; said second switch-over valve (70) being supplied by said hydraulic fluid pressure control system with an actuating hydraulic fluid pressure (Pd), when it is present, and when not so supplied being positively switched to its said second switched position irrespective of any other control pressures supplied thereto; said second switch-over valve further being supplied with said throttle hydraulic fluid pressure (Pth) by said hydraulic fluid pressure control system (27); and, when said second switch-over valve (70) is being supplied with said actuating hydraulic fluid pressure (Pd), it is switched to its said first switched position when the pressure value of said throttle hydraulic fluid pressure (Pth) is less than said predetermined pressure value and is switched to its second switched position when the pressure value of said throttle hydraulic fluid pressure (Pth) is greater than said predetermined pressure value; said supply of said clutch hydraulic fluid pressure (Pc) which is being supplied towards said lock up clutch control valve (38) as said second control hydraulic fluid pressure (conduit 53, 85) being intercepted, if and only if the current value of said governor hydraulic fluid pressure (Pgo) is not over said first predetermined pressure value.

8. A transmission control system according to claim 7, wherein said second switch-over valve (70) comprises a valve element (72) which has a first position and a second position, and a means (73) for biasing said valve element (72) towards its said second position; said first switched position of said second switch over valve (70) being the state thereof in which said valve element (72) is in its said first switched position, and said second switched position of said second switch-over valve (70) being the state thereof in which said valve element (72) is in its said second switched position; said throttle hydraulic fluid pressure (Pth) acting on said valve element (72) so as to bias it towards its said second position; said actuating hydraulic fluid pressure (Pd), when present, acting on said valve element (72) so as to bias it towards its said first position; said switch-over valve being further formed with an input port (71) which is supplied with said source hydraulic fluid pressure (Pc), when it is present, by said hydraulic fluid pressure control system (27), and an output port (78) which communicates towards said lock up clutch control valve (38) so that hydraulic fluid pressure present at said output port (78) is supplied towards said lock up clutch control valve as said second control hydraulic fluid pressure (conduit 79, 85, 53); said input port (71) being communicated to said output port (78) when said valve element (72) is in its said first position; and said input port (71) being put out of communication with said output port (78) when said valve element (72) is in its said second position.

9. A transmission control system according to claim 8, said second switch over valve (70) being further formed with a drain port (97) which is communicated to said output port (78) when said valve element (72) is in its said second position.

10. A transmission control system according to one of the claims 2 to 9, wherein said switch over fail safe valve (39) has a first switched position and a second switched position, and when said lock up clutch control valve (38) is in its said second switched position, is communicated via said lock up clutch control valve (38) to said first and said second hydraulic fluid channels (47, 48); at which time said fail safe valve (39), when in its said first switched position, switches said first hydraulic fluid channel (47) so as to supply thereto a supply of said torque converter hydraulic fluid pressure (Pq) and switches said second hydraulic fluid channel (48) so as to release hydraulic fluid therefrom; and, when in its said second switched position, switches said second hydraulic fluid channel (48) so as to supply thereto a supply of said torque converter hydraulic fluid pressure (Pq) and switches said first hydraulic fluid channel (47) so as to release hydraulic fluid therefrom; said fail safe valve (39) being switched to its said second switched position when governor hydraulic fluid pressure (Pgo) is greater than said first predetermined pressure value, and being switched to its said first switched position when governor hydraulic fluid pressure (Pgo) is less than said first predetermined pressure value.

11. A transmission control system according to claim 10, wherein further said switch over fail safe valve (39) controls supply of said second control hydraulic fluid pressure (conduit 79, 85, 53) to said lock up clutch control valve (38); said switch over fail safe valve (39), when in its said first position, interrupting said supply of said second control hydraulic fluid pressure to said lock up clutch control valve (38), so that at this time said lock up clutch control valve (38) is definitely not supplied with said second control hydraulic fluid pressure (conduit 85, 53); and said switch-over fail safe valve (39), when in its said second position, allowing communication of said supply of said second control hydraulic fluid pressure to said lock up clutch control valve (38).

**Patentansprüche**

1. Automatisches Getriebe für ein maschinengetriebenes Fahrzeug, mit:

(a) einem Schalt-Getriebemechanismus (2), der eine Vielzahl von mittels hydraulischen Fluiddrucks betätigten Reibungseingriffsvorrichtungen mit einer erste Reibungseingriffsvorrichtung (21), die bei Eingriff eine Höchst-Geschwindigkeitsstufe bildet, und einer zweiten Reibungseingriffsvorrichtung (23) aufweist, die bei Eingriff eine der Höchst-Geschwindigkeitsstufe nächste Geschwindigkeitsstufe bildet, wobei vorgesehen ist, daß die anderen Reibungseingriffsvorrichtungen gemäß einem besonderen vorbestimmten Muster der Kombination von Eingriff und Nicht-Eingriff in oder außer Eingriff stehen,

(b) einem Drehmomentwandler (1) mit einer Überbrückungskupplung (3), der einen ersten und zweiten Hydraulikfluid-Kanal (12, 13) aufweist, die mit dem Inneren des Drehmomentwandlers verbunden sind, wobei die Überbrückungskupplung wahlweise in Abhängigkeit davon, ob der Hydraulikfluiddruck über den ersten Hydraulikfluid-Kanal (12) zugeführt und den zweiten Hydraulikfluid-Kanal (13) abgeleitet oder über den zweiten Hydraulikfluid-Kanal (13) zugeführt und über den ersten Hydraulikfluid-Kanal (12) abgeführt wird, in oder außer Eingriff steht, und einem Getriebe-Steuersystem, mit:

(c) einer Quelle (29) für einen Hydraulikfluiddruck,

(d) einem Steuerventil (30) für einen Hydraulikfluid-Leitungsdruck, das einen Hydraulikfluid-Leitungsdruck (P1) von der Quelle erzeugt,

(e) einem Steuerventil (33) für einen Hydraulikfluid-Regelungsdruck, das einen Hydraulikfluid-Regelungsdruck (Pgo) von dem Hydraulikfluid-Leitungsdruck erzeugt, wobei der Hydraulikfluid-Regelungsdruck die Fahrzeuggeschwindigkeit repräsentiert und mit waschsender Fahrzeuggeschwindigkeit ansteigt,

(f) einem Steuerventil (37) für einen Hydraulikfluid-Wandlerdruck, der einen Hydraulikfluid-Wandlerdruck (Pq) von der Quelle erzeugt,

(g) einem Geschwindigkeitsschaltventil (36), das eine Zufuhr des Hydraulikfluid-Leitungsdrucks alternativ umschaltet, so daß ein Hydraulikfluid-Bremsdruck (Pb), wenn das Schaltgetriebe die höchste Geschwindigkeitsstufe bildet, oder ein Hydraulikfluid-Kupplungsdruck (Pc) vorgesehen ist, wenn das Schaltgetriebe die der höchsten nächste Geschwindigkeitsstufe bildet, wobei

(h) ein Steuerventil (38) für die Überbrückungskupplung ein Gehäuse, das mit einer Bohrung versehen ist, ein Steuerschieberelement (40) und ein Kolbenelement (41), die koaxial derart in die Bohrung eingesetzt sind, daß sie mit ihren Enden aneinanderstoßen, sowie eine Feder (42) aufweist, die das Steuerschieberelement gegen den Kolben drückt, wobei an einem dem Steuerschie-berelement entgegengesetzten Ende des Kolbe-nelementes eine erste Kammer (=54), der das Kolbenelement eine erste wirksame Druckaufnahmefläche zuwendet, um die anliegenden Enden des Steuerschieberelementes und des Kolbenelementes herum ein zweite Kammer (=53), der das Steuerschieberelement eine zweite wirksame Druckaufnahmefläche zuwendet, und an dem anderen, dem Kolbenelement entgegengesetzten Ende des Steuerschiebeelementes eine dritte Kammer (=52) gebildet ist, der das Steuerschie-berelement eine dritte wirksame Druckaufnahme-fläche zuwendet, wobei die dritte wirksame Druckaufnahmefläche verglichen mit der ersten und der zweiten wirksamen Druckaufnahmefläche so klein ist, daß das Steuerschieberelement in Richtung der dritten Kammer bewegt wird, wenn entweder die erste oder die zweite Kammer mit dem Hydraulikfluid-Leitungsdruck versorgt wird, während die dritte Kammer mit dem Hydraulikfluid-Leitungsdruck versorgt wird, wobei das Steuerventil für die Überbrückungskupplung derart umgeschaltet wird, daß, wenn das Steuerschieberelement (49) in Richtung der dritten Kammer verschoben ist, der Hydraulikfluid-Wandlerdruck (Pq) dem ersten Hydraulikfluid-Kanal (12) zugeführt wird, während der zweite Hydraulikfluid-Kanal (13) entlastet wird, und daß, wenn das Steuerschieberelement (40) in Richtung der zweiten Kammer verschoben ist, der Hydraulikfluid-Wandlerdruck (Pq) dem zweiten Hydraulikfluid-Kanal (13) zugeführt wird, während der erste Hydraulikfluid-Kanal (12) entlastet ist, und (i) einem Hydraulikfluid-Kreislauf zur Steuerung der Überbrückungskupplung, der Umschalt-Ventilvorrichtungen (39, 60) mit zumindest einem ersten Umschaltventil (39) umfaßt, das mittels des Hydraulikfluid-Regelungsdrucks (Pgo) betätigt wird, wobei die Umschalt-Ventilvorrichtungen den Hydraulikfluid-Bremsdruck (Pb) und den Hydraulikfluid-Kupplungsdruck (Pc) einzeln der einen (=54) und der anderen (=53) der ersten und zweiten Kammer (=54, 53) des Steuerventils für die Überbrückungskupplung (38) zuführen, wenn der Hydraulikfluid-Regelungsdruck (Pgo) höher als ein vorbestimmter Wert ist, während der Hydraulikfluid-Leitungsdruck (P1) konstant der dritten Kammer (=52) des Steuerventils für die Überbrückungskupplung zugeführt wird.

2. Getriebe-Steuerventil gemäß Anspruch 1, des weiteren mit einem Drosselventil zur Steuerung des Hydraulikfluiddrucks (32), das vom Hydraulikfluid-Leitungsdruck (Pl) einen Hydraulik-fluid-Drosseldruck (Pth) erzeugt, der die Last der Maschine repräsentiert und mit dem Ansteigen der Last der Maschine anwächst, wobei der Hydraulikfluid-Kreislauf zur Steuerung der Überbrückungskupplung des weiteren ein zweites Umschaltventil (70) aufweist, das mittels des Hydraulikfluid-Drosseldrucks (Pth) betätigt wird und mit dem ersten Umschaltventil (39), das mittels des Hydraulikfluid-Regelungsdrucks (Pgo) betätigt wird, bei Übertragung des Hydraulikfluid-Kupplungsdrucks (Pc) in Reihe geschaltet ist, wobei das zweite Umschaltventil (70) die Übertragung des Hydraulikfluid-Kupplungsdrucks erlaubt, wenn der Hydraulikfluid-Drosseldruck (Pth) geringer als ein vorbestimmter Wert ist.

3. Getriebe-Steuersystem gemäß Anspruch 1 oder 2, wobei am Steuerventil für die Überbrükkungskupplung (38) ein zweiter Hydraulikfluid-Steuerdruck (85, 53), der vom Hydraulikfluid-Kupplungsdruck (Pc) abgeleitet ist, vorgesehen ist, wenn und nur wenn der Stromwert des Hydraulikfluid-Regelungsdruck (Pgo) über einem ersten vorbestimmten Druckwert liegt und der Hydraulikfluid-Drosseldruck (Pth) geringer als ein zweiter vorbestimmter Druckwert ist, wobei der erste vorbestimmte Druckwert für das Schalten des (betriebssicheren) Umschaltventils (39) verantwortlich ist, das die Zufuhr des zweiten Hydraulikfluid-Steuerdrucks (85, 53) zum Steuerventil für die Überbrückungskupplung (38) steuert.

4. Getriebe-Steuersystem gemäß einem der Ansprüche 1 bis 3, des weiteren mit einem dritten Umschaltventil (60), das eine erste und zweite Schaltstellung aufweist und in seiner ersten Schaltstellung die Zufuhr des Hydraulikfluid-Bremsdrucks derart schaltet, daß der Hydrau-fluid-Bremsdruck als ein erste Hydraulikfluid-Steuerdruck (Leitung 54, 68) dem Steuerventil für die Überbrückungskupplung (38) zugeführt wird, und das in seiner zweiten Schaltstellung die Zufuhr des Hydraulikfluid-Bremsdrucks nicht schaltet, so daß das Steuerventil für die Überbrückungskupplung (38) in diesem Fall nicht mit einem ersten Hydraulikfluid-Steuerdruck versorgt wird, wobei das dritte Umschaltventil (60) mittels eines Hydraulikfluiddruck-Steuersystems (27) mit dem Hydraulikfluid-Regelungsdruck (Pgo) versorgt und in seine zweite Schaltstellung geschaltet wird, wenn der Druckwert des Hydraulikfluid-Regelungsdrucks (Pgo) geringer als ein weiterer vorbestimmter Wert ist, wohingegen es in seine erste Schaltstellung geschaltet wird, wenn der Druckwert des Hydraulikfluid-Regelungsdrucks größer als der weitere vorbestimmte Druckwert ist.

5. Getriebe-Steuersystem gemäß Anspruch 4, wobei das dritte Umschaltventil (60) ein Ventilelement (61), das eine erste und zweite Stellung hat, und eine Vorrichtung (26) zur Beaufschlagung des Ventilelementes in dessen zweite Stellung aufweist, wobei die erste Schaltstellung des dritten Umschaltventils den Zustand, in dem das Ventilelement (61) sich in seiner ersten Schaltstellung befindet, und die zweite Schaltstellung des dritten Umschaltventils den Zustand darstellt, in dem das Ventilelement (61) sich in seiner zweiten Schaltstellung befindet, wobei der Hydraulikfluid-Regelungsdruck (Pgo) derart auf das Ventilelement (61) einwirkt, daß das Ventilelement (61) in seine erste Stellung gedrängt wird, wobei das dritte Umschaltventil (60) des weiteren mit einer Eingangsöffnung (65), der mittels des Hydraulikfluiddruck-Steuersystems (27) der Hydraulikfluid-Bremsdruck (Pb) zugeführt wird, wenn dieser vorliegt, und einer Ausgangsöffnung (67) versehen ist, die mit dem Steuerventil für die Überbrückungskupplung (38) derart verbunden ist, daß der an der Ausgangsöffnung (67) vorhandene Hydraulikfluiddruck als erster Hydraulikfluid-Steuerdruck (Leitung 54, 68) dem Steuerventil für die Überbrückungskupplung (38) zugeführt wird, wobei die Eingangsöffnung (65) mit der Ausgangsöffnung (67) verbunden ist, wenn das Ventilelement (61) sich in seiner ersten Stellung befindet, und wobei die Eingangsöffnung (65) mit der Ausgangsöffnung (67) nicht verbunden ist, wenn das Ventilelement (61) sich in seiner zweiten Stellung befindet.

6. Getriebe-Steuersystem gemäß Anspruch 5, wobei das dritte Umschaltventil (60) des weiteren mit einer Drainöffnung (99) versehen ist, die mit der Ausgangsöffnung (67) verbunden ist, wenn das Ventilelement (61) sich in seiner zweiten Stellung befindet.

7. Getriebe-Steuersystem · nach einem der Ansprüche 1 bis 6, wobei das zweite Umschaltventil (70) eine erste und eine zweite Schaltstellung aufweist und, wenn es sich in seiner ersten Schaltstellung befindet, die Zufuhr des Hydraulikfluid-Kupplungsdrucks (Pc) so schaltet, daß dieser als ein zweiter Hydraulikfluid-Steuerdruck (Leitung 85, 53) dem Steuerventil für die Überbrückungskupplung (38) zugeführt wird, sowie, wenn es sich in seiner zweiten Schaltstellung befindet, die Zufuhr des Hydraulikfluid-Kupplungsdrucks (Pc) zum Steuerventil für die Überbrückungskupplung (38) nicht schaltet, so daß das Steuerventil für die Überbrückungskupplung (38) in deisem Fall nicht mit einem zweiten Hydraulikfluid-Steuerdruck versorgt wird, wobei das zweite Umschaltventil (70) mittels des Hydraulikfluiddruck-Steuersystems mit einem wirksamen Hydraulikfluiddruck (Pd) versorgt wird, wenn dieser vorliegt, und, wenn es derart nicht versorgt wird, unabhängig von irgendwelchen anderen zugeführten Steuerdrücken auf seine zweite Schaltstellung geschaltet wird, wobei das zweite Umschaltventil des weiteren mittels des Hydraulikfluiddruck-Steuersystems (27) mit dem Hydraulikfluid-Drosseldruck (Pth) versorgt, sowie, wenn es mit dem wirkenden Hydraulikfluiddruck (Pd) versorgt wird, in seine erste Schaltstellung geschaltet wird, wenn der Druckwert des Hydraulikfluid-Drosseldrucks (Pth) geringer als der vorbestimmte Druckwert ist, und in seine zweite Schaltstellung geschaltet wird, wenn der Druckwert des Hydraulikfluid-Drosseldrucks (Pth) größer als der vorbestimmte Druckwert ist, wobei die Zufuhr des Hydraulikfluid-Kupplungsdrucks (Pc), der dem Steuerventil für die Überbrückungskupplung (38) als zweiter Hydraulikfluid-Steuerdruck (Leitung 53, 85) zugeführt wird, unterbrochen wird, wenn und nur wenn der Stromwert des Hydraulikfluid-Regelungsdrucks (Pgo) nicht über dem ersten vorbestimmten Druckwert liegt.

8. Getriebe-Steuersystem gemäß Anspruch 7, wobei das zweite Umschaltventil (70) ein Ventilelement (72), das eine erste und eine zweite Stellung hat, und eine Vorrichtung (73) zur Beaufschlagung des Ventilelementes (72) in dessen zweite Stellung aufweist, wobei die erste Schaltstellung des zweiten Umschaltventils (70) den Zustand, in dem das Ventilelement (72) sich in seiner ersten Schaltstellung befindet, und die zweite Schaltstellung des zweiten Umschaltventils (70) den Zustand darstellt, in dem das Ventilelement (72) sich in seiner zweiten Schaltstellung befindet, wobei der Hydraulikfluid-Drosseldruck (Pth) derart auf das Ventilelement (72) einwirkt, daß es in seine zweite Stellung gedrängt wird, wobei der wirkende Hydraulikfluiddruck (Pd) bei Vorhandensein derart auf das Ventilelement (72) · einwirkt, daß dieses in seine erste Stellung gedrängt wird, wobei das Umschaltventil des weiteren mit einer Eingangsöffnung (71), der mittels des Hydraulikfluiddruck-Steuersystems (27) der Hydraulikfluid-Quelldruck (Pc) zugeführt wird, wenn dieser vorliegt, und einer Ausgangsöffnung (78) versehen ist, die mit dem Steuerventil für die Überbrückungskupplung (38) derart verbunden ist, daß der an der Ausgangsöffnung (78) vorhandene Hydraulikfluiddruck als zweiter Hydraulikfluid-Steuerdruck (Leitung 79, 85, 53) dem Steuerventil für die Überbrückungskupplung zugeführt wird, wobei die Eingangsöffnung (71) mit der Ausgangsöffnung (78) verbunden ist, wenn das Ventilelement (72) sich in seiner zweiten Stellung befindet, und wobei die Eingangsöffnung (71) mit der Ausgangsöffnung (78) nicht verbunden ist, wenn das Ventilelement (72) sich in seiner zweiten Stellung befindet.

9. Getriebe-Steuersystem nach Anspruch 8, wobei das zweite Umschaltventil (70) des weiteren mit einer Drainöffnung (97) versehen ist, die mit der Ausgangsöffnung (78) verbunden ist, wenn das Ventilelement (72) sich in seiner zweiten Stellung befindet.

10. Getriebe-Steuersystem nach einem der Ansprüche 2 bis 9, wobei das betriebssichere Umschaltventil (39) eine erste und eine zweite Schaltstellung und, wenn das Steuerventil für die Überbrückungskupplung (38) sich in seiner zweiten Schaltstellung befindet, mit dem ersten und zweiten Hydraulikfluid-Kanal (47, 48) über das Steuerventil für die Überbrückungskupplung (38) verbundent ist, wobei das betriebssichere Ventil (39), wenn es sich in seiner ersten Schaltstellung befindet, zu diesem Zeitpunkt den ersten Hydraulikfluid-Kanal (47) schaltet, so daß diesem der Hydraulikfluid-Drehmomentwandlerdruck (Pq) zugeführt wird, und den zweiten Hydraulikfluid-Kanal (48) derart schaltet, daß aus diesem Hydraulikfluid entlassen wird, und wobei es, wenn es sich in seiner zweiten Schaltstellung befindet, den zweiten Hydraulikfluid-Kanal (48) schaltet, so daß diesem der Hydraulikfluid-Kanal (48) schaltet, so daß diesem der Hydraulikfluid-Drehmomentwandlerdruck (Pq) zugeführt wird, und den ersten Hydraulikfluid-Kanal (47) derart schaltet, daß aus diesem Hydraulikfluid entlassen wird, wobei das betriebssichere Ventil (39) in seine zweite Schaltstellung, wenn der Hydraulikfluid-Regelungsdruck (Pgo) größer als ein vorbestimmter Druckwert ist, und in seine erste Schaltstellung geschaltet wird, wenn der Hydraulikfluid-Regelungsdruck (Pgo) geringer als der vorbestimmte Druckwert ist.

11. Getriebe-Steuersystem nach Anspruch 10, wobei des weiteren das betriebssichere Schaltventil (39) die Zufuhr des zweiten Hydraulikfluid-Steuerdrucks (Leitung 79, 85, 53) zum Steuerventil für die Überbrückungskupplung (38) steuert, wobei das betriebssichere Schaltventil (39), wenn es sich in seiner ersten Stellung befindet, die Zufuhr des zweiten Hydraulikfluid-Steuerdrucks zum Steuerventil für die Überbrückungskupplung (38) unterbricht, so daß zu diesem Zeitpunkt das Steuerventil für die Überbrückungskupplung (38) definitiv nicht mit dem zweiten Hydraulikfluid-Steuerdruck (Leitung 85, 53) versorgt wird, und wobei das betriebssichere Schaltventil (39), wenn es sich in seiner zweiten Stellung befindet, die Zufuhr des zweiten Hydraulikfluid-Steuerdrucks zum Steuerventil für die Überbrückungskupplung (38) erlaubt.

**Revendications**

1. Une transmission automatique pour un véhicule à moteur, comprenant:

(a) un mécanisme (2) de transmission à engrenages comportant une pluralité de mécanismes de mise en prise à friction, actionnés par la pression d'un fluide hydraulique, incluant un premier mécanisme (21) de mise en prise à friction qui, lorsqu'il est en prise, procure le niveau de vitesse le plus élevé, et un second mécanisme (23) de mise en prise à friction qui, lorsqu'il est en prise, procure un niveau de vitesse venant à la suite du niveau le plus élevé, à la condition que les autres mécanismes de mise en prise à friction soient mis en prise ou ne soient plus en prise selon un schéma particulier fixé à l'avance de combinaison de mise en prise ou de désengagement;

(b) un convertisseur (1) de couple comportant un embrayage (3) de verrouillage comprenant un premier et un second passage (12, 13) de fluide hydraulique, communiquant avec l'intérieur dudit convertisseur de couple, ledit embrayage de verrouillage étant sélectivement embrayé ou débrayé selon que la pression de fluide hydraulique est fournie audit premier passage (12) de fluide hydraulique et est déchargée du second passage (13) de fluide hydraulique ou est fournie audit second passage (13) de fluide hydraulique et est déchargée dudit premier passage (12) de fluide hydraulique; et un système de commande de transmission comprenant:

(c) une source (29) de pression de fluide hydraulique;

(d) une valve (30) de commande de pression hydraulique de conduit d'alimentation, qui produit une pression (PI) de fluide hydraulique de conduit d'alimentation, à partir de ladite source;

(e) une valve (33) de commande de pression hydraulique de régulateur qui produit une pression de fluide hydraulique de régulateur (Pgo) à partir de ladite pression de fluide hydraulique de conduit d'alimentation, ladite pression de fluide hydraulique de régulateur étant représentative de la vitesse du véhicule et augmentant avec l'accroissement de la vitesse du véhicule;

(f) une valve de commande de pression de fluide hydraulique de convertisseur (37) qui produit une pression de fluide hydraulique de convertisseur (Pq) à partir de ladite source;

(g) une valve (36) de changement de vitesse, qui fait passer l'alimentation par ladite pression de fluide hydraulique de conduit d'alimentation pour fournir en alternative ou bien une pression (Pb) de fluide hydraulique de freinage lorsque ladite transmission à engrenages doit fournir ledit niveau de vitesse le plus élevé, ou bien une pression de fluide hydraulique d'embrayage (Pc) quand ladite transmission à changement de vitesse doit fournir le niveau de vitesse venant à la suite du niveau le plus élevé; et avec

(h) une valve (38) de commande d'embrayage de verrouillage comprenant un corps comportant un alésage, un organe (40) de valve à tiroir et un organe de piston (41) montés coaxialement dans ledit alésage de façon à ce qu'ils soient en appui l'un sur l'autre par leurs extrémités et un ressort (42) qui repousse ledit organe de bobine de valve en direction dudit piston, une première chambre (54) étant délimitée à une extrémité dudit organe de piston située à distance dudit organe de tiroir de valve dans laquelle ledit organe de piston délimite une première surface fonctionnelle de réception de pression, une seconde chambre (53) délimitée autour des extrémités qui se rejoignent dudit organe de tiroir de valve et dudit organe de piston dans laquelle ledit organe de tiroir de valve délimite une seconde surface fonctionnelle de réception de pression, et une troisième chambre (52) finie à une autre extrémité dudit organe de tiroir à distance dudit organe de piston, dans laquelle ledit organe de tiroir de valve délimite une troisième surface fonctionnelle de réception de pression, ladite troisième surface fonctionnelle de réception de pression étant suffisamment faible, comparée aux première et seconde surfaces fonctionnelles de réception de pression, pour que ledit organe de tiroir de valve soit déplacé en direction de ladite troisième chambre lorsque soit ladite première chambre, soit ladite seconde chambre est alimentée par ladite pression de fluide hydraulique de conduit d'alimentation, pendant que ladite troisième chambre est alimentée avec ladite pression de fluide hydraulique du conduit d'alimentation, ladite valve de commande d'embrayage de verrouillage étant commutée de façon à alimenter avec ladite pression (Pq) de fluide hydraulique de convertisseur ledit premier passage (12) de fluide hydraulique, tout en mettant à la décharge ledit second passage (13) de fluide hydraulique quand ledit organe (49) de tiroir de valve est déplacé en direction de ladite troisième chambre, et pour alimenter avec ladite pression (Pq) de fluide hydraulique de convertisseur le second passage (13) de fluide hydraulique, tout en mettant à la décharge ledit premier passage (12) de fluide hydraulique quand ledit organe (40) de tiroir de valve est déplacé en direction de ladite seconde chambre; et

(i) un circuit de fluide hydraulique de commande d'embrayage de verrouillage comportant un moyen (39, 60) de valve de commutation incluant au moins une première valve (39) de commutation qui est actionnée par ladite pression (Pgo) de fluide hydraulique de régulateur, ledit moyeu de valve de commutation conduisant ladite pression (Pb) de fluide hydraulique de freinage, et ladite pression (Pc) de fluide hydraulique d'embrayage, séparément jusqu'à l'une (54) et l'autre (53) des dites première et seconde chambres (54, 53) de ladite valve (38) de commande d'embrayage de verrouillage quand ladite pression (Pgo) de fluide hydraulique de régulateur est plus élevée qu'une valeur fixée à l'avance, tandis que la pression (Pl) de fluide hydraulique du conduit d'alimentation est délivrée en permanence à ladite troisième chambre (52) de ladite valve de commande d'embrayage de verrouillage.

2. Une valve de commande de transmission selon la revendication 1, comprenant une valve (32) de commande de pression de fluide hydraulique de papillon qui produit une pression (Pth) de fluide hydraulique de papillon à partir de ladite pression (Pl) de fluide hydraulique du conduit d'alimentation, ladite pression de fluide hydraulique de papillon étant représentative de la charge du moteur et augmentant avec la charge du moteur, dans lequel ledit circuit de fluide hydraulique de commande d'embrayage de verrouillage comprend en outre une seconde valve (70) de commutation qui est actionnée par ladite pression (Pth) de fluide hydraulique de papillon et est reliée en série avec ladite première valve (39) de commutation actionnée par ladite pression (Pgo) de fluide hydraulique de régulateur en laissant passer ladite pression (Pc) de fluide hydraulique d'embrayage, ladite seconde valve (70) de commutation permettant le passage de ladite pression de fluide hydraulique d'embrayage quand ladite pression (Pth) de fluide hydraulique de papillon est inférieure à une valeur fixée à l'avance.

3. Un système de commande de transmission selon la revendication 1 ou 2, dans lequel une seconde pression (85, 53) de fluide hydraulique de commande, dérivée de ladite pression (Pc) de fluide hydraulique d'embrayage est fournie à ladite valve (38) de contrôle d'embrayage de verrouillage, quand et seulement quand la valeur en cours de ladite pression (Pgo) de fluide hydraulique de régulateur est supérieure à une première valeur de pression et que ladite pression (Pth) de fluide hydraulique de papillon est inférieure à une seconde valeur de pression déterminée à l'avance, dans lequel la première valeur de pression fixée à l'avance provoque la commutation de ladite valve (39) de commutation (à sécurité intrinsèque) commandant l'alimentation avec ladite seconde pression (85, 83) de fluide hydraulique de commande, de la valve (38) de commande d'embrayage de verrouillage.

4. Un système de commande de transmission selon l'une des revendications 1 à 3, comprenant en outre une troisième valve (60) de commutation qui comporte une première position de commutation et une seconde position de commutation, qui, quand elle est dans sa première position de commutation, déclenche une alimentation avec ladite pression de fluide hydraulique de freinage pour alimenter avec ladite pression de fluide hydraulique de freinage ladite valve (38) de commande d'embrayage de verrouillage comme première pression de fluide hydraulique de command (conduit 54, 68) et qui, quand elle est dans sa deuxième position de commutation, ne déclenche pas d'alimentation avec ladite pression de fluide hydraulique de freinage si bien que ladite valve (38) de commande d'embrayage de verrouillage n'est pas dans ce cas alimentée par une quelconque première pression de fluide hydraulique de commande, ladite troisième valve (60) de commutation étant alimentée avec ladite pression (Pgo) de fluide hydraulique de régulateur par un système (27) de commande de pression de fluide hydraulique et étant commutée dans sa seconde position de commutation quand la valeur de ladite pression (Pgo) de fluide hydraulique de régulateur est inférieure à une autre valeur de pression fixée à l'avance, tandis qu'elle est commutée vers sa première position de commutation quand la valeur de cette dite pression de fluide hydraulique de régulateur est plus grande que ladite autre valeur de pression fixée à l'avance.

5. Un système de commande de transmission selon la revendication 4, dans lequel ladite troisième valve (60) de commutation comprend un élément de valve (61) qui a une première position et une seconde position, et un moyen (62) destiné à pousser ledit élément de valve vers sa seconde position, ladite première position de commutation de ladite troisième valve de commutation correspondant à l'état dans lequel ledit élément de valve (61) est dans sa première position de commutation, et ladite seconde position de commutation de ladite troisième valve de commutation correspondant à l'état dans lequel ledit élément de valve (61) est dans ladite seconde position de commutation, ladite pression (Pgo) de fluide hydraulique de régulateur agissant sur ledit élément de valve (61) de façon à repousser ledit élément de valve (61) en direction de sa première position, ladite troisième valve (60) de commutation comportant en outre un orifice d'entrée (65) qui est alimenté par ladite pression (Pb) de fluide hydraulique de freinage, quand elle est présente, par ledit système (27) de commande de pression de fluide hydraulique, et un orifice de sortie (67) qui communique avec ladite valve (38) de commande d'embrayage de verrouillage de façon que la pression de fluide hydraulique présente dans à orifice de sortie (67) soit fournie à ladite valve (38) de commande d'embrayage de verrouillage en tant que ladite première pression de fluide hydraulique de commande (conduit 54, 68), ledit orifice d'entrée (65) communiquant avec ledit orifice de sortie (67) quand ledit élément de valve (61) est dans sa dite première position, et ledit orifice d'entrée (65) étant mis hors de communication avec ledit premier orifice de sortie (67) quand ledit élément de valve (61) es dans sa seconde position.

6. Un système de commande de transmission selon la revendication 5, dans lequel ladite valve (60) de commutation comporte en outre un orifice (99) de purge qui communique avec ledit orifice de sortie (67) quand ledit élément (61) de valve est dans sa seconde position.

7. Un système de commande de transmission selon une des revendications 1 à 6, dans lequel ladite seconde valve de commutation (70) a une première position de commutation et une seconde position de commutation, laquelle valve, quand elle est dans sa première position de commutation, enclenche l'alimentation de ladite pression (Pc) de fluide hydraulique d'embrayage, de façon à fournir ladite pression (Pc) de fluide hydraulique d'embrayage à ladite valve (38) de commande d'embrayage de verrouillage en tant que seconde pression de fluide hydraulique de commande (conduit 85, 53), et ladite valve, quand elle est dans ladite seconde position de commutation ne déclenche pas l'alimentation par ladite pression (Pc) de fluide hydraulique de commande d'embrayage de verrouillage de ladite valve (38) de commande d'enclenchement de l'embrayage, si bien que ladite valve (38) de commande d'embrayage de verrouillage n'est dans ce cas pas alimentée par une quelconque seconde pression de fluide hydraulique de commande, ladite seconde valve (70) de commutation étant alimentée via ledit système de commande de pression hydraulique, par une pression (Pd) de fluide hydraulique d'actionnement, quand elle est présente, et quand elle n'est pas ainsi alimentée, étant positivement commutée vers sa seconde position de commutation, indépendamment de toutes autres pressions de commande qui lui sont fournies, ladite seconde valve de commutation étant alimentée, en outre, avec ladite pression (Pth) de fluide hydraulique de papillon par ledit système (27) de commande de pression de fluide hyrdaulique et, quand ladite seconde valve (70) de commutation est alimentée avec ladite pression (Pd) de fluide hydraulique d'actionnement, elle est déplacée dans sa première position de commutation quand la valeur de pression de ladite pression (Pth) de fluide hydraulique de papillon est inférieure à ladite valeur de pression fixée à l'avance et elle est déplacée dans sa seconde position de commutation quand la valeur de pression de ladite pression (Pth) de fluide hydraulique de papillon est supérieure à ladite valeur de pression fixée à l'avance, ladite alimentation avec ladite pression (Pc) de fluide hydraulique d'embrayage qui est fournie à ladite valve (38) de commande d'embrayage de verrouillage quand ladite seconde pression (conduit 53, 85) de fluide hydraulique de commande est interrompue, si et seulement si la valeur courante de ladite pression (Pgo) de fluide hydraulique de régulateur n'est pas supérieure à ladite valeur de la première pression fixée à l'avance.

8. Un système de commande de transmission selon la revendication 7, dans lequel ladite seconde valve (70) de commutation comprend un élément de valve (72) qui a une première position et une deuxième position et un moyen (73) destiné à repousser ledit élément (72) de valve vers sa seconde position, ladite première position de commutation de ladite seconde valve (70) de commutation correspondant à l'état dans lequel ledit élément (72) de valve est dans sa première position de commutation, et ladite seconde position de commutation de ladite seconde valve (70) de commutation correspondant à l'état dans lequel ledit second élément de valve (72) est dans sa seconde position de commutation, ladite pression (Pth) de fluide hydraulique agissant sur ledit élément de valve (72) de façon à le repousser en direction de sa seconde position, ladite pression (Pd) de fluide hydraulique d'actionnement, lorsqu'elle est présente, agissant sur ledit élément de valve (72), de façon à le repousser en direction de sa première position, ladite valve de commutation comportant en outre un orifice d'entrée (71) qui est alimenté par ladite pression (Pc) de fluide hydraulique de source, quand elle est présente, par ledit système (27) de commande de pression de fluide hydraulique, et un orifice (78) de sortie qui communique avec ladite valve (38) de commande d'embrayage de verrouillage de façon que la pression de fluide hydraulique présente audit orifice de sortie (78) soit fournie à ladite valve de commande d'embrayage de verrouillage en tant que ladite seconde pression (conduit 79, 85, 53) de fluide hydraulique de commande; ledit orifice d'entrée (71) communiquant avec ledit orifice de sortie (78) quand ledit élément de valve (72) est dans sa première position, et ledit orifice d'entrée (71) étant mis hors de communication avec ledit orifice de sortie (78) quand ledit élément de valve (72) est dans sa seconde position.

9. Un système de commande de transmission selon la revendication 8, ladite seconde valve (70) de commutation comportant en outre un orifice (97) de purge qui communique avec ledit orifice de sortie (78) quand ledit élément de valve (72) se trouve dans sa seconde position.

10. Un système de commande de transmission selon l'une des revendications 2 à 9, dans lequel ladite valve (39) intrinsèque de commutation à sécurité intrinsèque comporte une première position de commutation et une seconde position de commutation, et, lorsque ladite valve (38) de commande d'embrayage de verrouillage se trouve dans sa seconde position de commutation, est en communication par l'intermédiaire de ladite valve (38) de commande d'embrayage de verrouillage, avec lesdits premier et second passages (47, 48) de fluide hydraulique, auquel instant ladite valve (39) à sécurité intrinsèque, quand elle est dans sa première position de commutation, met en circuit ledit premier passage (47) pour fluide hydraulique de façon à alimenter ce dernier avec ladite pression (Pq) de fluide hydraulique de convertisseur de couple et met en circuit le second passage (48) de fluide hydraulique de façon à évacuer à la purge le fluide hydraulique de ce dernier, et, quand elle est dans sa seconde position de commutation, met en circuit ledit second passage (48) de fluide hydraulique de façon à alimenter ce dernier avec ladite pression (Pq) de fluide hydraulique de convertisseur de couple, et met en circuit ledit premier passage (47) de fluide hydraulique de façon à évacuer à la purge le fluide hydraulique qui s'y trouve, ladite valve (39) à sécurité intrinsèque étant déplacée dans sa seconde position de commutation lorsque la pression (Pgo) de fluide hydraulique de régulateur est plus élevée que ladite première valeur de pression fixée à l'avance et étant déplacée dans sa première position de commutation quand la pression (Pgo) de fluide hydraulique de régulateur est inférieure à ladite première valeur de pression fixée à l'avance.

11. Un système de commande de transmission selon la revendication 10, dans lequel ladite valve (39) de commutation à sécurité intrinsèque commande, en outre, l'alimentation de ladite valve (38) de commande d'embrayage de verrouillage avec ladite seconde pression (conduit 79, 85, 53) de fluide hydraulique de commande, ladite valve (39) de commutation à sécurité intrinsèque, quand elle est dans sa première position, interrompant la fourniture de ladite seconde pression de fluide hydraulique de commande à ladite valve (38) de commande d'embrayage de verrouillage, de façon qu'à ce moment, ladite valve (38) de commande d'embrayage de verrouillage ne soit absolument pas alimentée par ladite pression (conduit 85, 53) de fluide hydraulique de commande, et ladite valve (39) de commutation à sécurité intrinsèque, quand elle est dans sa seconde position, permettant de faire communiquer ladite alimentation par ladite seconde pression de fluide hydraulique de commande avec ladite valve (38) de commande d'embrayage de verrouillage.